# EUROPÄISCHE PATENTSCHRIFT

(11) **EP 2 958 722 B1**
(45) Veröffentlichungstag und Bekanntmachung des Hinweises auf die Patenterteilung: **04.10.2017**
(21) Anmeldenummer: 14706483.6
(22) Anmeldetag: 21.02.2014
(51) Int. Cl.: B29B 9/06, B29B 17/00, B29C 47/08, B29C 47/70, B29C 47/00

(54) **SCHMELZEVERARBEITUNGSANLAGE**
MELT-PROCESSING SYSTEM
INSTALLATION DE TRANSFORMATION DE MATIÈRE EN FUSION

(30) Priorität: 21.02.2013 DE 202013001692 U
(43) Veröffentlichungstag der Anmeldung: 30.12.2015
(73) Patentinhaber: Gala Industries, Inc., Eagle Rock, VA 24085 (US)
(72) Erfinder: ELOO, Michael, 46509 Xanten (DE); VELTEL, Jürgen, 47626 Kevelaer (DE)
(74) Vertreter: Thoma, Michael
(86) Internationale Anmeldenummer: PCT/EP2014/000464
(87) Internationale Veröffentlichungsnummer: WO 2014/127918

(56) Entgegenhaltungen:
- EP-A1- 1 970 180
- WO-A2-01/10620
- DE-U1-202011 104 968
- GB-A- 2 009 972
- JP-A- H07 227 844
- US-B1- 6 787 073

## Beschreibung

Die vorliegende Erfindung betrifft eine Schmelzeverarbeitungsanlage, mit einem Schmelzebeschicker zum Beschicken eines Verarbeitungskopfs, insbesondere Granulierkopfs, mit Schmelze, wobei dem Schmelzebeschicker stromauf des Verarbeitungskopfs ein Anfahrventil zum Ableiten der Schmelze während einer Anfahr- und/oder Umrüstphase zugeordnet ist.

Derartige Schmelzeverarbeitungsanlagen können verschieden konfiguriert und insbesondere als Granulieranlagen beispielsweise in Form von Unterwassergranulieranlagen ausgebildet sein, wobei je nach Anwendung verschiedene Materialien als Schmelze verarbeitet werden können, beispielsweise Thermoplaste, Polymermassen- und mischungen mit und ohne Additive wie beispielsweise in Form von expandierbaren Polymeren versetzt mit Treibmittel, mit Fasern versetzte Schmelzemassen oder andere im Schmelzezustand verarbeitbare Materialien, insbesondere Kunststoffschmelzen. Alternativ zu solchen Granulieranlagen kann die Schmelzeverarbeitungsanlage aber auch als Rohrextrusionsanlage oder Blasfolienanlage ausgebildet sein, bei denen als Verarbeitungskopf ein entsprechender Extrusionskopf bzw. ein Blasfolienkopf vorgesehen ist. Je nach Anwendung kann der genannte Verarbeitungskopf der Schmelzeverarbeitungsanlage auch ein anderes Formgebungswerkzeug umfassen, mittels dessen die Schmelze in der gewünschten Weise umgeformt bzw. geformt wird.

Derartige Schmelzeverarbeitungsanlagen werden üblicherweise mit einem Anfahrventil betrieben, um beim Anfahren der Anlage, einem Umrüsten der Anlage beispielsweise auf einen anderen Granulierkopf bzw. Verarbeitungskopf, einem Umstellen der Schmelze beispielsweise von farbiger Schmelze auf nicht farbige Schmelze oder einem anderen Umstellungsvorgang, in dem die Anlage nicht im stationären Betriebszustand bzw. im Sollbetriebspunkt gefahren werden kann, die vom Schmelzebeschicker gelieferte Schmelze an dem zumindest einen Verarbeitungskopf vorbei ableiten zu können. Derartige Verarbeitungsköpfe wie Unterwassergranulierköpfe sind nämlich relativ empfindlich, wenn sie mit vom Sollzustand zu stark abweichender Schmelze beaufschlagt werden, beispielsweise noch zu kalter Schmelze oder damit einhergehend zu zähflüssiger Schmelze, was beispielsweise zu einem Verstopfen der Lochplatte führen kann.

Das Anfahrventil ist hierbei üblicherweise in dem Förderweg vom Schmelzebeschicker, beispielsweise einem Extruder, und dem Verarbeitungskopf angeordnet, wobei das Anfahrventil zusätzlich zu einem Beschickungs- bzw. Versorgungsausgang, der mit dem Verarbeitungskopf verbindbar ist, zumindest einen Ableitausgang umfasst, der die Schmelze am Verarbeitungskopf vorbei ableitet. Über einen solchen Ableitausgang, der in die Umgebung münden kann und/oder von dem bestimmungsgemäßen Prozessweg der Schmelzeverarbeitungsanlage bzw. der Verbindung zwischen Schmelzebeschicker und einem Verarbeitungskopf wegführt bzw. hiervon abzweigt, kann für die weitere Verarbeitung in einem Verarbeitungskopf der Schmelzeverarbeitungsanlage nicht geeignetes Material bzw. Schmelzematerial von dem Verarbeitungskopf ferngehalten und sozusagen ausgesondert werden, wobei die solchermaßen abzusondernde Schmelze aus verschiedenen Gründen als Ausschussmaterial zu behandeln sein kann, beispielsweise weil die Schmelze noch nicht die richtige Temperatur hat und/oder noch umgeschmolzene Stückchen enthält und/oder farbliche Verunreinigungen enthält und/oder andere die Verarbeitung im Granulier- bzw. Verarbeitungskopf beeinträchtigende Eigenschaften hat. Der mit dem Schmelzebeschicker verbindbare Eingangskanal des Anfahrventils kann durch eine verstellbare Weiche beispielsweise in Form eines Drehschiebers oder dergleichen wahlweise mit dem Beschickungskanal oder mit dem Ableitkanal verbunden werden. Ein derartiges Anfahrventil ist beispielsweise aus der Schrift EP 1 970 180 bekannt. Ein gattungsgemäßes Anfahrventil kann ferner auch eine Verteilfunktion übernehmen bzw. als Verteilerventil dienen, insbesondere über mehrere Verarbeitungsausgänge mit mehreren Verarbeitungsköpfen verbindbar sein, um durch das Anfahrventil geleitete Schmelze verschiedenen Verarbeitungsköpfen zuführen zu können, um die Schmelze jeweils bestimmungsgemäß verarbeiten zu können.

Die aus einem solchen Anfahrventil abgeleitete Schmelze wird bisweilen einfach auf den Boden abgelassen, wo sich die Schmelze je nach Dauer des Anfahrvorgangs zu mehr oder minder große Platten bzw. Klumpen verteilt, die nach dem Erstarren vom Boden gelöst und zerteilt werden müssen, was naturgemäß sehr aufwendig ist. Alternativ zum einfachen Ableiten auf den Boden ist es bisweilen auch vorgesehen, unter das Ableitventil Auffangbehälter beispielsweise in Form von verfahrbaren Schütten zu stellen, die dann, sobald sie voll werden, weggefahren und durch einen neuen, leeren Behälter ersetzt werden. Das Wegfahren der Behälter mit üblicherweise noch flüssiger Schmelze ist sicherheitstechnisch sehr gefährlich, da Schmelze aus dem Behälter schwappen kann. Zum anderen ergeben sich nach dem Abkühlen und Verfestigen der Schmelze Handhabungsprobleme, da sich sehr große Blöcke ergeben, die zunächst aus dem Behälter herauszulösen und sodann in handhabbare Stücke zu zerhacken sind, damit sie recycelt werden können.

Die Schrift WO 01/10620 schlägt es vor, den Schmelzeausschuss, der über das Anfahrventil abgeleitet wird, mittels eines Zerteilers in handliche Stücke zu zerteilen, die über ein Rutsche mit Wasserstrahldruck und ablaufendem Wasserschwall in einen Sammelkorb gefördert werden. Der Zerteiler umfasst einen hin- und herbewegbaren Schlitten mit zwei Schmelzekanälen, die beim Hin und Herbewegen des Schlittens wechselweise mit dem vom Anfahrventil her kommenden Ableitkanal in Strömungsverbindung bringbar sind, so dass die Schmelze abwechselnd durch den einen und dann durch den anderen Schmelzekanal strömt und entsprechende Schmelzeportionen entstehen. Gleichzeitig ist am Auslass der Schmelzekanäle eine feststehende Lochblende vorgesehen, die beim Hin- und Herbewegen des Schlittens die Auslässe der Schmelzekanäle wechselweise verschließt und freigibt, so dass aus den Schmelzekanälen austretenden Schmelzebatzen an der Kante der Lochblende abgetrennt werden.

Ein Anfahrventil für eine Schmelzeverarbeitungsanlage mit einem dem Anfahrventil nachgeordneten Zerteiler ist auch aus der Schrift DE 20 2011 104 968 U1 bekannt, wobei der Zerteiler einen hin und her bewegbaren Zerteilerkopf besitzt, in dem mehrere Schmelzekanäle ausgebildet sind, von denen je nach Stellung des Zerteilerkopfs jeweils ein anderer mit einem vom Anfahrventil her kommenden Ableitkanal in Strömungsverbindung steht, so dass durch Bewegen des Zerteilerkopfes der aus dem Anfahrventil ausströmende Schmelzestrang in etwa gleich große Schmelzeportionen zerteilt werden kann. Die Schmelzekanäle verlaufen in dem bewegbaren Zerteilerkopf zur Vertikalen geneigt schräg nach unten und besitzen eine zylindrische Konturierung.

Bei einem solchen bekannten Schmelzezerteiler treten jedoch wiederum ähnliche Probleme wie bei einem Granulierkopf auf. Zum einen ist der Zerteilerkopf nach einem Betriebszyklus mühsam zu reinigen. Wenn der Anfahrprozess der Anlage abgeschlossen ist und das Anfahrventil die Schmelze nicht mehr als Ausschuss ableitet, sondern auf den Granulierkopf durchleitet, erstarren Schmelzereste in dem Zerteilerkopf mangels weiterem Schmelzenachschub, so dass beim nächsten Anfahrprozess der Anlage ohne Reinigung des Zerteilerkopfes ein Verstopfen drohen würde und die Bypassfunktion des Anfahrventils nicht mehr gewährleistet wäre. Zum anderen kann es beim Zerteilen des abzuleitenden Materials zu Druckpulsationen kommen, wenn beim Hin- und Herfahren des Zerteilerkopfes die Strömungsverbindung der Schmelzekanäle umgestellt wird bzw. die Schmelzekanäle nicht vollständig offen sind. Zum anderen kann es auf den Abführrutschen der Schmelzebatzen zu einem erneuten Zusammenkleben kommen, wenn der Wasserstrahl bzw. der Wasserschwall die Rutsche hinab nicht stark genug ist.

Der vorliegenden Erfindung liegt die Aufgabe zugrunde, eine verbesserte Schmelzeverarbeitungsanlage der eingangs genannten Art zu schaffen, die Nachteile des Standes der Technik vermeidet und letzteren in vorteilhafter Weise weiterbildet. Insbesondere soll die Zerteilung der Ausschussschmelze störungsunanfälliger und möglichst wartungsfrei gestaltet werden und auch bei stark schwankenden Ausschuss-Schmelzemassenströmen störungsfrei funktionieren.

Erfindungsgemäß wird diese Aufgabe durch eine Schmelzeverarbeitungsanlage gemäß Anspruch 1 gelöst. Bevorzugte Ausgestaltungen der Erfindung sind Gegenstand der abhängigen Ansprüche.

Es wird vorgeschlagen, den Zerteilerkopf so auszubilden, dass sich die zerteilten Schmelzebatzen der Ausschussschmelze noch in den Schmelzekanälen des sich bewegenden Zerteilerkopfes zumindest teilweise von den Kanalwandungen lösen und von der Schwerkraft getrieben leichter aus dem Zerteilerkopf austreten können. Die verschiedenen Schmelzekanäle des Zerteilerkopfes, die wechselweise mit dem vom Anfahrventil her kommenden Ableitkanal in Verbindung treten, sind in spezieller Weise konturiert, so dass ein Verkleben des Zerteilerkopfes unwahrscheinlich wird und dessen Reinigung unnötig bzw. zumindest beträchtlich einfacher wird. Erfindungsgemäß besitzen die Schmelzekanäle des Zerteilerkopfs zumindest eine stufenförmige Querschnittserweiterung in ihrem Einströmabschnitt, eine vom Austrittsquerschnitt des Ableitkanals abweichende Querschnittsform sowie einen offenen Mündungsbereich aus dem Zerteiler heraus. Durch die stufenförmige Querschnittserweiterung zusammen mit der vom Ableitkanal abweichenden Querschnittsform der Schmelzekanäle kann sich die Schmelze bzw. ein zerteilter Schmelzebatzen besser von den Wandungen des Zerteilerkopfes lösen. Gleichzeitig können die Schmelzeportionen ungehindert aus den Schmelzekanälen des Zerteilerkopfs austreten, da die Mündungen der Schmelzekanäle in jeder Stellung des Zerteilerkopfes offen und barrierefrei und nicht durch Lochblenden oder Abschlagmesser behindert sind. Der Schmelzeabriss, durch den der Schmelzestrang letztlich in die gewünschten Schmelzeportionen zerteilt wird, tritt im Wesentlichen unmittelbar an der Schnittstelle zwischen Ableitkanal und sich bewegendem Zerteilerkopf auf.

In Weiterbildung der Erfindung kann die genannte stufenförmige Querschnittserweiterung im Einströmabschnitt der Schmelzekanäle des Zerteilerkopfs eine Abrisskante mit Überhang aufweisen bzw. eine überhängende, hinterschnittene Schmelzeklippe bilden, im Bereich derer sich die Schmelze von den Schmelzekanalwandungen zumindest teilweise löst und stromab derer die Schmelze freihängend abtropft bzw. von der Schwerkraft getrieben zumindest teilweise ohne Wandungskontakt durch die Schmelzekanäle bzw. aus den Schmelzekanälen herausgetrieben wird.

Um den Schmelzeabriss bzw. die Schmelzeablösung von den Kanalwandungen weiter zu unterstützen, können die Schmelzekanäle des Zerteilerkopfs im Bereich der stufenförmigen Querschnittserweiterung nicht nur ihr Querschnittsmaß bzw. ihre Querschnittsfläche sprunghaft ändern, sondern auch ihre Querschnittsform ändern. Die im Zerteilerkopf ausgebildeten Schmelzekanäle können stromauf und stromab der genannten stufenförmigen Querschnittserweiterung verschiedene Querschnittsformen besitzen, beispielsweise in einem Abschnitt umfangsseitig rund oder abgerundet konturiert sein und in einem anderen Abschnitt eckig konturiert sein.

Insbesondere können die Schmelzekanäle stromauf der Querschnittserweiterung eine zumindest teilweise abgerundete Querschnittsform und stromab der Querschnittserweiterung eine mehreckige Querschnittsform besitzen. Durch einen solchen Übergang von einer runden Querschnittsform auf eine eckige Querschnittsform treten insbesondere in den Bereichen der hinzukommenden Ecken sprunghafte Querschnittserweiterungen auf, denen das Schmelzematerial nicht folgen kann, so dass es zu einer verbesserten Ablösung der Schmelzeportionen kommt.

In quantitativer Hinsicht ist der genannte, zumindest eine stufenförmige Querschnittssprung so gestaltet, dass der die Querschnittserweiterung passierende Schmelzestrang dem Querschnittssprung nicht folgen kann und eine Ablösung eintritt. Insbesondere können die genannte Schmelzekanäle stromab der stufenförmigen Querschnittserweiterung jeweils eine Querschnittsfläche besitzen, die mindestens das Zweifache, vorzugsweise mehr als das Dreifache der Austrittsquerschnittsfläche des vom Anfahrventil her kommenden Ableitkanals beträgt, insbesondere wenn man besagten Ableitkanal in seinem Öffnungsquerschnitt betrachtet. Eine solche Verdreifachung oder Vervielfachung des Kanalquerschnitts sorgt für ein zuverlässiges Austreten der Schmelzebatzen insbesondere auch gegen Ende des Anfahrprozesses, wenn keine weitere Schmelze mehr abgeleitet und in den Zerteilerkopf nachläuft.

In vorteilhafter Weiterbildung der Erfindung tritt insbesondere gleich an der Schnittstelle zwischen dem vom Anfahrventil her kommenden Ableitkanal und dem sich bewegenden Zerteilerkopf ein Querschnittssprung auf, wenn ein jeweiliger Schmelzekanal im Zerteilerkopf mit dem genannten Ableitkanal in Strömungsverbindung steht. Insbesondere können die Einströmquerschnitte der Schmelzekanäle des Zerteilerkopfes jeweils - also nicht in Summe miteinander, sondern jeweils für sich betrachtet - größer sein als der Auslassquerschnitt des genannten Ableitkanals. Dabei kann der genannte Auslassquerschnitt des Ableitkanals, der bei entsprechender Zerteilerkopfstellung in einen der Schmelzekanäle des Zerteilerkopfes mündet, selbst eine Abrisskante bilden, an der der Schmelzestrang sich von der Kanalwandung löst, so dass der Schmelzestrang dann zumindest teilweise ohne Wandungskontakt in den Schmelzekanal des Zerteilerkopfs eintritt.

Das Übermaß der Einströmquerschnitte der Schmelzekanäle des Zerteilerkopfes gegenüber der Austrittsöffnung des Ableitkanals kann grundsätzlich unterschiedlich bemessen sein, beträgt vorzugsweise jedoch zumindest 1/4 der Ableitkanal-Austrittsquerschnittsfläche, d.h. jeder der Schmelzekanäle hat eine Einströmquerschnittsfläche von zumindest 125% der Austrittsquerschnittsfläche des Ableitkanals. Vorzugsweise kann die Querschnittsfläche jedes Schmelzekanals an dessen Einströmöffnung auch 200% oder mehr der Austrittsquerschnittsfläche des Arbeitskanals betragen.

Die Einlassöffnung der Schmelzekanäle ist dabei vorteilhafterweise teilweise an die Konturierung des Auslassquerschnitts des Ableitkanals formangepasst, teilweise jedoch hiervon abweichend konturiert. Insbesondere können die Einlassöffnungen der Schmelzekanäle des Zerteilerkopfes auf den Seiten, die beim Öffnen des jeweiligen Schmelzekanals zum Ableitkanal hin zuerst aufmacht, an die Kontur des Ableitkanals formangepasst sein. Dies führt dazu, dass dann, wenn der Zerteilerkopf relativ zu besagtem Ableitkanal so weit bewegt wird, dass der Öffnungsquerschnitt des Ableitkanals vollständig freigegeben wird, der Übergang von der noch teilweise verdeckten Stellung zur vollständig geöffneten Stellung schlagartig eintritt, nämlich dann, wenn der formangepasste Abschnitt der Eintrittsöffnung des Schmelzekanals des Zerteilerkopfes den Auslassquerschnitt des Ableitkanals vollständig überstreicht. Hierdurch wird ein langsames, nach und nach erfolgendes Freigeben des Ableitkanals vermieden, wie es beispielsweise bei einer geraden Eintrittskante, die eine gerundete Austrittskante überstreichen würde, eintreten würde.

In vorteilhafter Weiterbildung der Erfindung können die Einlassöffnungen der Schmelzekanäle des Zerteilerkopfes jeweils - grob gesprochen - V-förmig konturiert, insbesondere in Form eines an der Spitze angerundeten Vs, konturiert sein bzw. eine näherungsweise parabelförmige Konturierung besitzen, die an ihrem Kulminationspunkt an die Rundung des Auslassquerschnitts des Ableitkanals angepasst ist.

Die V-förmige Konturierung ist dabei vorteilhafterweise symmetrisch bezüglich der Bewegungsrichtung des Zerteilerkopfes angeordnet. Wird der Zerteilerkopf nach Art eines Schlittens linear hin- und herbewegt, bildet die lineare Bewegungsachse die Mittellinie der besagten V-Kontur. Ist der Schlitten rotatorisch beweglich, bildet die Umfangsrichtung bzw. eine Tangente hieran die Mittellinie zu besagtem V.

Die V-förmige Konturierung ist dabei derart orientiert, dass bei der Öffnungsbewegung des Zerteilerkopfes die - abgerundete - Spitze des Vs vorausläuft.

Die in genanntem Zerteilerkopf vorgesehenen Schmelzekanäle können prinzipiell in herkömmlicher Weise als umfangsseitig vollständig geschlossene, röhrenförmige Kanäle ausgebildet sein. Alternativ können die genannten Schmelzekanäle in Weiterbildung der Erfindung aber auch umfangsseitig zu einer Seite hin offen ausgebildet sein und/oder einen offenen Umfangssektor von beispielsweise 10% bis 50% des Kanalumfangs besitzen. Bei Ausbildung als Schlitten können insbesondere die zu den Stirnseiten des Schlittens, d.h. den in Verfahrrichtung stirnseitig liegenden Seiten, hin angeordneten Kanalwandungen fehlen bzw. die Kanäle zu den besagten Stirnseiten hin offen ausgebildet sein. Eine zu einer Außenseite des Zerteilerkopfs offene Kanalumfangsseite ermöglicht eine beträchtlich leichtere Reinigung.

Durch das Vorsehen mehrerer Schmelzekanäle im Zerteilerkopf kann vorteilhafterweise immer zumindest ein Schmelzekanal zumindest teilweise offen gehalten werden, wodurch ein kontinuierliches Ableiten der Schmelze aus dem Anfahrventil ermöglicht und - insbesondere in Verbindung mit der genannten Querschnittserweiterung - Druckschwankungen durch ein zyklisches Aufstauen vermieden werden. Ist einer der Schmelzekanäle gerade abgesperrt bzw. durch die Abtrennmittel in seinem Auslassquerschnitt beeinträchtigt, kann die Schmelze über einen anderen Schmelzekanal abströmen, so dass sich insgesamt ein kontinuierliches Ableiten aus dem Anfahrventil realisieren lässt. Durch das zyklische Absperren bzw. das zyklische Abtrennen des Schmelzestrangs tritt die Portionierung ein, da immer nur ein definiertes Schmelzevolumen aus dem jeweiligen Schmelzekanal austreten kann, bevor der weitere Austritt unterbunden bzw. der nachfolgende Massestrom abgetrennt wird.

Der Zerteilerkopf kann dem Absperrventil in unterschiedlicher Art und Weise zugeordnet sein. Nach einer vorteilhaften Ausführung der Erfindung kann der Zerteilerkopf stromab des Mündungsbereiches des Ableitkanals des Anfahrventils, vorteilhafterweise unmittelbar an dessen Mündungsbereich anschließen, angeordnet und relativ zum Absperrventil beweglich gelagert sein, vorteilhafterweise derart, dass je nach Stellung des Zerteilerkopfs ein jeweils anderer Schmelzekanal in Strömungsverbindung mit der Ableitöffnung des Anfahrventils bringbar ist. Eine Absperrung eines oder mehrerer Schmelzekanäle des Zerteilerkopfes kann bei einer solchen Ausbildung durch Verstellen bzw. Bewegen des Verteilerkopfes relativ zum Anfahrventil erreicht werden. Die Absperrmittel werden hierbei durch die Schnittstelle zwischen Anfahrventil und Verteilerkopf gebildet, wobei ein jeweiliger Schmelzekanal des Verteilerkopfes dann freigeschaltet ist, wenn er mit dem Ableitkanal des Anfahrventils zumindest teilweise in Fluchtung gebracht ist, während der Schmelzekanal dann abgesperrt ist, wenn er außer Fluchtung mit dem Ableitkanal des Anfahrventils gebracht ist.

Der Verteilerkopf muss jedoch nicht zwangsweise unmittelbar mit der Ableitöffnung des Anfahrventils in Verbindung gebracht werden. Vorteilhafterweise kann auch ein Zwischenstück vorgesehen sein, das fest mit dem Anfahrventil verbunden ist und einen mit dessen Auslasskanal kommunizierenden Ableitkanal umfasst, der dann in der genannten Weise durch Bewegen des Verteilerkopfs mit den darin vorgesehenen Schmelzekanälen in Strömungsverbindung bzw. Außerströmungsverbindung verbringbar ist. Hierdurch kann der Zerteiler als eigenständige Baugruppe ausgebildet werden, bei der die Schnittstellen zu dem bewegbaren Zerteilerkopf nicht durch das Anfahrventil vorgegeben sind, sondern durch das genannte Zwischen- bzw. Adapterstück in geeigneter Weise angepasst werden können.

Vorteilhafterweise kann durch das genannte Zwischenstück auch der Durchmesser des Ableitkanals in geeigneter Weise angepasst werden. Insbesondere kann der Ableitkanal in besagtem Anschlussstück eine düsenförmige Ausbildung und/oder eine zum Ausgang hin vorgesehene Querschnittsverjüngung des Schmelzekanals vorsehen, wodurch das Absperren bzw. Abtrennen des Schmelzestrangs erleichtert werden kann.

Vorteilhafterweise kann die Querschnittskontur des genannten Ableitkanals in verschiedener Weise geformt sein, um die Außenkontur bzw. Form der Schmelzebatzen in der gewünschten Weise zu konturieren. Insbesondere kann der genannte Ableitkanal ausgangsseitig eine düsenförmige Verjüngung besitzen, an die sich dann ein zumindest näherungsweise zylindrischer Austrittsabschnitt anschließt, wobei hier zylindrisch kreiszylindrisch meinen kann, jedoch nicht meinen muss, da je nach gewünschten Schmelzebatzenformen verschiedene Grundquerschnittskonturen Verwendung finden können.

Unabhängig von der genannten düsenförmigen Verjüngung und/oder dem anschließenden Austrittsabschnitt mit näherungsweise gleichbleibendem Querschnitt kann der Ableitkanal vorzugsweise ausgangsseitig gemäß einer vorteilhaften Ausbildung der Erfindung eine abgerundete oder näherungsweise runde Querschnittskontur besitzen, insbesondere im Querschnitt kreisförmig oder oval oder elliptisch oder auch s-förmig abgerundet oder blütenförmig konturiert sein. Alternativ zu solchen runden Querschnittsformen kann der Ableitkanal auch, vorzugsweise im Austrittsbereich, eine eckige Querschnittskontur besitzen, insbesondere rechteckig oder quadratisch oder dreieckig oder mehreckig oder sternförmig oder x-förmig konturiert sein. In Weiterbildung der Erfindung sind auch Mischformen der vorgenannten Querschnittskonturierungen möglich, bspw. auf einer Seite mit zwei Ecken nach Art eines eckigen Us und auf einer gegenüberliegenden Seite abgerundet. Beispielsweise kann auch eine näherungsweise kreuzförmige Querschnittskonturierung vorgesehen sein, bei der die inneren Ecken und/oder die äußeren Ecken abgerundet sein können.

In Weiterbildung der Erfindung kann der Ableitkanal auch eine ringförmige Querschnittskonturierung besitzen und/oder als Ringdüse ausgebildet sein, sodass der zu zerteilende Schmelzestrang nach Art eines hohlen Schlauches erzeugt wird und dementsprechend innen hohle Schmelzeportionen erzeugt werden können. Die genannte ringförmige Querschnittskonturierung des Ableitkanals, vorzugsweise ausgangsseitig, kann in der vorgenannten Weise rund oder eckig ausgebildet sein. Hierbei können die Innenmantelfläche und die Außenmantelfläche der ringförmigen Querschnittskonturierung einander entsprechend geformt bzw. konturiert sein, bspw. innen- und außenseitig kreisförmig konturiert sein oder innen- und außenseitig sternförmig konturiert sein. Alternativ können aber auch die Innen- und Außenmantelflächen der Ringkontur voneinander verschieden konturiert sein, bspw. dergestalt, dass der Ringspalt innenmantelflächenseitig kreisrund konturiert und außenmantelflächenseitig sternförmig oder eckig konturiert ist. Grundsätzlich können hierbei alle vorgenannten Querschnittskonturierungen miteinander kombiniert werden.

In vorteilhafter Weiterbildung der Erfindung kann die Größe der Düsenöffnung bzw. des Austrittsquerschnitts bzw. des Ableitkanals einstellbar ausgebildet sein, insbesondere kann der Durchmesser und/oder die Querschnittsfläche und/oder der Verjüngsgrad des Düsenabschnitts, das heißt das Verhältnis von Eintritts- zu Austrittsdurchmesser des Düsenabschnitts, einstellbar ausgebildet sein, um den Ableitkanal und/oder dessen Austrittsquerschnitt an das Schwellverhalten der jeweilig zu verarbeitenden Schmelze anpassen zu können. Die genannte Einstellbarkeit kann in einfacher Weise durch aufsetzbare Adapterstücke bzw. wechselbare Ableitkanal-Einsätze eingestellt werden. Alternativ oder zusätzlich können auch kontinuierlich verstellbare Lösungen bspw. nach Art eines Bohrfutters vorgesehen sein.

Alternativ oder zusätzlich kann der Verteilerkopf hierbei in das Anfahrventil integriert sein, insbesondere dergestalt, dass das Anfahrventil zwei oder mehr als zwei Ableitkanäle umfasst, die wahlweise, insbesondere alternativ zueinander durch Verstellen des Ventilkorpus bzw. der Verteilerweiche des Anfahrventils mit dem Einlaufkanal des Anfahrventils in Strömungsverbindung bringbar und hiervon außer Strömungsverbindung bringbar sind. Beispielsweise kann das Anfahrventil einen mit dem Schmelzebeschicker verbindbaren Einlaufkanal, zumindest einen mit dem Verarbeitungskopf verbindbaren Beschickungskanal und zumindest zwei Ableitkanäle umfassen, wobei durch zumindest einen Ventilkorpus beispielsweise in Form eines Ventilschiebers und/oder eines Drehschiebers der Einlasskanal wahlweise auf den Beschickungskanal oder einen der beiden Ableitkanäle durchgeschaltet werden kann. Vorteilhafterweise kann hierbei ein gemeinsamer beweglicher Ventilkorpus vorgesehen sein, der das Öffnen bzw. Absperren der verschiedenen Kanäle gemeinsam erledigt. Hierdurch kann durch zyklisches Hin- und Herbewegen des Ventilkorpus zwischen einer Stellung, in der der Einlasskanal auf den ersten Ableitkanal durchgeschaltet ist, und einer zweiten Stellung, in der der Einlasskanal auf den zweiten Ableitkanal durchgeschaltet ist, ein Portionieren der aus dem Anfahrventil abgeleiteten Schmelze bewerkstelligt werden. Vorteilhafterweise lässt sich hierbei die Größe der Schmelzeportionen durch die Geschwindigkeit bzw. Frequenz steuern, mit der der Ventilkorpus hin- und herbewegt wird.

Alternativ zu einer solchen in das Anfahrventil integrierten Ausbildung kann der genannte Zerteilerkopf auch eine separate Baugruppe bilden, die ausgangsseitig auf die Ableitöffnung bzw. Ableitöffnungen des Anfahrventils gesetzt wird.

Der Zerteilerkopf, das Zwischen- bzw. Adapterstück und die Anschlussteile des Anfahrventils können grundsätzlich aus verschiedenen Werkstoffen gefertigt sein, wobei insbesondere für die Zerteilerwerkzeuge und Anschlussstücke in der Reibpaarung warmfeste Stähle zum Einsatz kommen können, die entsprechend der Eigenschaften der zu verarbeitenden Kunststoffschmelzen verschleißfest, korrosionsfest oder eine Kombination aus beidem ausgeführt sein können. Ein solcher warmfester Stahl kann auch für andere Bauteile, die sich relativ zueinander bewegen und eine Reibpaarung bilden, sinnvoll sein, beispielsweise die entsprechenden Bauteile des Granulierkopfs.

Um die Bauteileigenschaften gezielt an die zu verarbeitenden Kunststoffschmelzen anzupassen, können die entsprechenden Bauteile, insbesondere der Zerteilerkopf und das genannte Zwischen- bzw. Adapterstück und die entsprechenden Anschlussstücke auch mit einer Oberflächenbeschichtung bzw. einer Funktionsschicht versehen sein. Insbesondere können die Zerteilerwerkzeuge und Anschlussstücke in der Reibpaarung mittels einer Funktionsschicht auf die entsprechenden Eigenschaften der Kunststoffschmelzen eingestellt werden, so dass Adhäsion, Kohäsion, Anbackungen, Verschleiß, Diffusion, Korrosion, Aufschweißungen und/oder Festfressen der Reibpaare zueinander bzw. aufeinander vermieden oder zumindest reduziert werden, aber auch speziell das Ablösen der Kunststoffschmelze vom Schneid- und/oder Schmelzebatzen-Umlenkbereich unterstützt und Anklebungen vermieden werden.

Ist der genannte Zerteilerkopf in der vorgenannten Weise relativ zum Anfahrventil beweglich angeordnet, kann in vorteilhafter Weise der Zerteilerkopf Teil eines Schlittens oder Wagens sein, der von einem Schlittenantrieb hin- und herfahrbar angetrieben werden kann. Der Schlitten kann hierbei insbesondere derart hin- und hergefahren werden, dass im Wechsel zueinander jeweils ein anderer der mehreren Schmelzekanäle des Zerteilerkopfes mit einer Ableitöffnung des Anfahrventils in Strömungsverbindung gebracht wird, während jeweils zumindest ein anderer Schmelzekanal des Zerteilerkopfes von der Ableitöffnung des Anfahrventils außer Strömungsverbindung gebracht wird. Die Antriebsvorrichtung für einen solchen hinund hergehend beweglichen Schlitten kann grundsätzlich unterschiedlich ausgebildet sein, beispielsweise hydraulisch, pneumatisch, elektrisch, mechanisch oder einer Kombination hieraus oder in anderer fremdenergiebetätigter Weise arbeiten. Nach einer vorteilhaften Ausführung der Erfindung kann beispielsweise ein Druckmittelzylinder vorgesehen sein, mittels dessen der Zerteilerkopf entlang einer vorbestimmten linearen Bewegungsbahn hin- und herbewegt werden kann, wobei die genannte Bewegungsbahn insbesondere gerade, gegebenenfalls aber auch bogenförmig gekrümmt sein kann.

Alternativ oder zusätzlich zu einer solchen Schlittenlösung kann der Zerteilerkopf auch drehbar gelagert sein und von einem Drehantrieb rotatorisch vorzugsweise kontinuierlich angetrieben werden. Der Zerteilerkopf kann hierbei nach Art eines Revolverkopfes ausgebildet sein, der mehrere Schmelzekanäle auf einem gemeinsamen Teilungskreis um die Drehachse herum aufweist und relativ zum Anfahrventil derart angeordnet ist, dass die Mündung des Ableitkanals des Anfahrventils auf besagtem Teilkreis liegt, so dass durch Drehen des Verteilerkopfs nacheinander verschiedene Schmelzekanäle mit dem Ableitkanal des Anfahrventils in Strömungsverbindung bringbar sind.

Der Drehantrieb kann hierbei ebenfalls unterschiedlich ausgebildet sein, beispielsweise hydraulisch, pneumatisch, elektrisch oder in einer Kombination der genannten Möglichkeiten arbeiten, beispielsweise einen Drehmotor umfassen, der mechanisch über Riemen, Zahnräder oder in anderer Weise getrieblich mit dem drehbaren Zerteilerkopf verbunden ist.

In vorteilhafter Weiterbildung der Erfindung kann die Größe der Schmelzeportionen durch Veränderung der Bewegungsgeschwindigkeit bzw. der Bewegungsfrequenz des Zerteilerkopfs relativ zum Anfahrventil variabel gesteuert werden. Wird die Bewegungsgeschwindigkeit bzw. die Bewegungsfrequenz erhöht, können kleinere Schmelzeportionen erzielt werden, während größere Schmelzeportionen durch eine Verlangsamung der genannten Bewegungsgeschwindigkeit bzw. Bewegungsfrequenz erreicht werden können.

In vorteilhafter Weiterbildung der Erfindung kann die genannte Bewegungsgeschwindigkeit und/oder Bewegungsfrequenz des Zerteilerkopfes durch eine Steuervorrichtung automatisch oder halbautomatisch gesteuert werden, insbesondere in Abhängigkeit einer erfassten Schmelzeportionsgröße, eines Schmelzeportionsgewichts oder eines Schmelzeportionsvolumens und/oder in Abhängigkeit eines Schmelzemassestroms der abgeleitet wird. Insbesondere kann die Bewegungsgeschwindigkeit bzw. Bewegungsfrequenz dann erhöht werden, wenn die Schmelzeportionen zu groß werden und/oder wenn der Beschickungsschmelzestrom zunimmt. Hierzu kann die Größe der portionierten Schmelzestücke erfasst werden, beispielsweise durch optische oder in anderer Weise durchgeführte Partikelgrö-ßenbestimmung. Alternativ oder zusätzlich kann der Schmelzemassestrom bestimmt werden, der vom Schmelzebeschicker bereitgestellt und/oder durch das Anfahrventil abgeleitet wird.

Um die aus dem Zerteilerkopf austretenden Schmelzeportionen möglichst schnell zumindest außenseitig soweit erstarren bzw. verfestigen zu lassen, dass die Materialstücke nicht mehr zusammenkleben und leicht handhabbar sind, ist in Weiterbildung der Erfindung eine Kühlvorrichtung zum Auskühlen der Schmelzeportionen zu zumindest teilweise verfestigten Materialbrocken vorgesehen.

Die Kühlvorrichtung zum Abkühlen der portionierten Schmelzevolumina kann grundsätzlich unterschiedlich ausgebildet sein und verschiedene, nacheinander oder parallel geschaltete Kühlvorrichtungen umfassen.

In Weiterbildung der Erfindung kann hierbei die genannte Kühlvorrichtung bereits den aus dem Anfahrventil austretenden Schmelzestrang abkühlen, während der Schmelzestrang von der Portioniervorrichtung in Portionen unterteilt wird. Alternativ oder zusätzlich kann die Kühlung auch bereits kurz vor der Portionierung einsetzen und/oder kurz nach der Portionierung vorgenommen werden. Die im Mündungsbereich des Anfahrventils und/oder im Bereich der Portioniervorrichtung vorgesehenen Kühlmittel können hierbei grundsätzlich verschieden ausgebildet sein, wobei die genannten Kühlmittel insbesondere einen Luft- und/oder Gaskühler zur Beaufschlagung der Schmelze mit Kühlluft und/oder Kühlgas umfassen können, beispielsweise in Form eines Kühlluftgebläses und/oder eines Kühlluftsaugers. Alternativ oder zusätzlich können die Kühlmittel einen Flüssigkeitskühler zur Beaufschlagung der Schmelze mit einer Kühlflüssigkeit umfassen, vorteilhafterweise in Form eines Flüssigkeitssprühers, der zumindest eine Sprühdüse umfasst, die auf den aus dem Anfahrventil austretenden Schmelzestrang gerichtet sein kann. Alternativ oder zusätzlich können die genannten Kühlmittel auch einen Kontaktkühler umfassen, der eine vom austretenden Schmelzestrang kontaktierte Kühlfläche umfasst. Insbesondere kann der genannte Kontaktkühler in den Mündungsbereich des Anfahrventils und/oder in den vorgenannten Zerteilerkopf, insbesondere dessen Mündungsbereich integriert sein, um die Mündungsbereiche der entsprechenden Schmelzekanäle zu kühlen.

Alternativ oder zusätzlich zu einer Kühlung der Schmelze beim Portionieren kann die Kühlvorrichtung auch die bereits portionierten Schmelzestücke, die gegebenenfalls bereits zumindest teilweise verfestigt sein können, kühlen. Insbesondere kann stromab der Portioniervorrichtung ein Abkühlbad vorgesehen sein, in das die portionierten Schmelzestücke eingetaucht werden, um Wärme an die Kühlflüssigkeit abzugeben und hierdurch abzukühlen. Durch ein solches Kühlbad kann den portionierten Schmelzestücken durch den Flüssigkeitskontakt in besonders effizienter Weise Wärme entzogen werden.

In vorteilhafter Weiterbildung der Erfindung ist das genannte Abkühlbad unterhalb der Portioniervorrichtung angeordnet und von den Schmelzeportionen durch Schwerkraft erreichbar. Dementsprechend kann auf eine fremdenergiebetätigte Transportvorrichtung zwischen Portioniervorrichtung und Abkühlbad verzichtet werden. Insbesondere kann das Abkühlbad im Wesentlichen senkrecht unter der Portioniervorrichtung angeordnet sein, so dass die Schmelzeportionen im freien Fall in das Abkühlbad fallen können. Gegebenenfalls können die Schmelzeportionen auch über eine Rutsche in das Schmelzebad hineingeleitet werden, wobei die genannte Rutsche eine mehr oder minder spitzwinklige Neigung zur Vertikalen aufweisen kann.

Je nach Volumen und verwendeter Kühlflüssigkeit kann das Abkühlbad ohne spezielle Kühlmittel die notwendige Temperatur halten. Gegebenenfalls kann das Abkühlbad zweikreisig ausgebildet werden, wobei dem Abkühlbad ein Sekundärkühlkreislauf mit einem außerhalb des Abkühlbads angeordneten Wärmetauscher und/oder einem innerhalb des Abkühlbads angeordneten Wärmetauschers zur Kühlung der Primärkühlflüssigkeit zugeordnet sein kann. Wird ein Unterwassergranulierer verwendet, kann der Wasserkreislauf des Granulierers zur Kühlung des Abkühlbads verwendet werden.

Die den Schmelzeportionen bzw. Materialbrocken entzogene Wärme könnte grundsätzlich einfach dissipativ abgebaut werden, beispielsweise über entsprechenden Wärmetausch mit der Umgebungsluft. In vorteilhafter Weiterbildung der Erfindung jedoch kann die den Schmelzeportionen bzw. Materialbrocken zu entziehende Wärme rückgewonnen und anderer Stelle der Verarbeitungsanlage oder der Gebäudetechnik, an der Wärme benötigt wird bzw. geheizt werden muss, gezielt eingesetzt werden. Hierzu kann der Kühlvorrichtung eine Wärmerückgewinnungseinrichtung zugeordnet sein, die bei der Kühlung anfallende Wärme gezielt rückgewinnt und speichert und/oder an einem zu beheizenden Anlagen- und/oder Gebäudeteil einsetzt bzw. dorthin transferiert.

Die Wärmerückgewinnung kann grundsätzlich an verschiedenen Stellen erfolgen und verschiedenen Kühlmitteln der Kühlvorrichtung zugeordnet sein. Insbesondere kann die Rückgewinnung im Bereich des zumindest einen Abkühlbads erfolgen, dem im Primär- und/oder Sekundärkreis zumindest ein Wärmetauscher zugeordnet sein kann, über den die Wärme rückgewonnen wird. Alternativ oder zusätzlich kann eine Wärmerückgewinnung über einen entsprechenden Wärmetauscher auch im Bereich der Vorkühlung erfolgen, beispielsweise dem vorgenannten Kontaktkühler, mit dem der zu portionierende Schmelzestrang im Bereich des Anfahrventils und/oder der Portioniervorrichtung gekühlt wird.

Die rückgewonnene Wärme kann beispielsweise dazu verwendet werden, in einer nachgeordneten Trocknungsstation, in der die gekühlten und verfestigten Materialbrocken getrocknet werden sollen, die beispielsweise mittels Gebläse verwendete Trocknungsluft vorzuwärmen. Wird ein Unterwassergranulierer verwendet, kann alternativ oder zusätzlich die rückgewonnene Wärme zum Vorheizen des Wasserkreislaufs des Unterwassergranulierers verwendet werden. Alternativ oder zusätzlich kann der Verarbeitungskopf der Schmelzeverarbeitungsanlage durch die rückgewonnene Wärme beheizt werden. Alternativ oder zusätzlich zum Beheizen solcher Verarbeitungsanlagenkomponenten kann die rückgewonnene Wärme jedoch auch beispielsweise dazu verwendet werden, um die Werkshalle zu beheizen bzw. die Gebäudeheizung zu unterstützen.

Um die weitere Handhabung der im Abkühlbad verfestigten und abgekühlten Materialbrocken zu erleichtern und/oder zu automatisieren, ist in Weiterbildung der Erfindung ein Abförderer zum Abfördern der Kunststoffbrocken aus dem Abkühlbad vorgesehen. Der genannte Abförderer kann hierbei grundsätzlich verschieden ausgebildet sein, beispielsweise zumindest ein nach Art eines Keschers ausgebildetes und antreibbares Einsammelsieb umfassen, das in das Abkühlbad tauchen und die dort befindlichen Materialbrocken abschöpfen kann. In Weiterbildung der Erfindung kann vorteilhafterweise jedoch insbesondere ein Bandförderer vorgesehen sein, der die im Abkühlbad befindlichen Materialbrocken aus dem Abkühlbad herausfördert.

In Weiterbildung der Erfindung kann der Bandförderer einen spitzwinklig zur Horizontalen geneigten, durch den Pegel des Abkühlbads hindurch verlaufenden Sammelbandabschnitt umfassen, der auf dem Abkühlbad schwimmende Materialbrocken einsammelt und abfördert. Vorteilhafterweise kann der Abförderer oder ein separates Funktionsmodul dem Abkühlbad zugeordnete Umwälzmittel umfassen, um das Abkühlbad umzuwälzen und durch die Umwälzung auf dem Wasser schwimmende Brocken auf den Förderer zu verbringen. Insbesondere können die Umwälzmittel hierbei derart ausgebildet sein, dass eine auf den Sammelbandabschnitt zulaufende Strömung erzeugt wird. Die genannten Umwälzmittel können beispielsweise umlaufende Schaufeln oder ähnliches umfassen, die beispielsweise mit einer Umlenkrolle oder einer Umlenkwalze des Bandförderers verbunden sein können.

Um auch absinkende Materialbrocken abfördern zu können, kann der Bandförderer alternativ oder zusätzlich zu dem genannten schräg durch den Pegel hindurch verlaufenden Sammelbandabschnitt einen am Boden des Abkühlbeckens angeordneten Sammelabschnitt umfassen, der im Wesentlichen liegend oder nur leicht zur Horizontalen geneigt angeordnet ist, insbesondere den Boden des Abkühlbeckens abdeckt, so dass absinkende Materialbrocken zwangsweise auf den genannten Sammelbandabschnitt gelangen.

Um die einzusammelnden Materialbrocken trotz des Wasserwiderstandes mitzunehmen, kann der Bandförderer an dem umlaufenden Fördermittel angebrachte Mitnehmer umfassen, beispielsweise in Form von Vorsprüngen, die vom Obertrum nach oben vorspringen. Vorteilhafterweise können solche Mitnehmer beispielsweise in Form eines Rechens oder in Form eines perforierten Querstegs ausgebildet sein, um keine zu starke Umwälzwirkung auf das Flüssigkeitsbad auszuüben.

In Weiterbildung der Erfindung ist das Umlaufmittel des Bandförderers flüssigkeitsdurchlässig bzw. nicht flüssigkeitshaltend ausgebildet. Insbesondere kann das umlaufende Fördermittel Ausnehmungen umfassen, durch die hindurch auf dem Fördermittel zunächst stehendes Wasser ablaufen kann. Beispielsweise kann ein perforiertes Förderband vorgesehen kann, beispielsweise in Form eines Textilbands. Alternativ oder zusätzlich kann ein Streifenbandförderer vorgesehen sein, bei dem das Förderband aus einer Vielzahl von nebeneinander verlaufenden Riemen gebildet wird, so dass durch die Spalte zwischen den Riemen die Flüssigkeit ablaufen kann. Alternativ oder zusätzlich kann das Obertrum des Bandförderers auch eine leichte Querneigung aufweisen und/oder leicht bauchig im Querschnitt gewölbt sein, so dass auf dem Förderband stehendes Wasser zur Seite hin ablaufen kann.

Um ein seitliches Herabfallen bzw. Herabrollen der mitzunehmenden Materialbrocken zu verhindern, können dem Förderband seitliche Randstege zugeordnet sein, beispielsweise in Form einer Reling, wobei vorteilhafterweise zwischen Förderband und der Randbegrenzung ein zumindest kleiner Spalt vorgesehen ist, um Flüssigkeit seitlich ablaufen zu lassen. Das Spaltmaß ist dabei an die abzufördernden Brocken angepasst, so dass die genannten Brocken nicht hindurch rutschen können.

In Weiterbildung der Erfindung können dem genannten Abförderer eine Kühlvorrichtung und/oder eine Trocknungsvorrichtung zugeordnet sein, um die abgeförderten Materialbrocken weiter zu kühlen und/oder zu trocknen. Gegebenfalls kann eine solche weitere Kühlungsvorrichtung und/oder Trocknungsvorrichtung nach einem weiteren Abkühlbad vorgesehen sein, in das ein erster Abschnitt des Abförderers die aus dem ersten Abkühlbad bzw. einem vorderen Abkühlbad hineinfördert. Um eine energieeffiziente und thermisch gleichermaßen wirksame Abkühlung durch mehrere Abkühlbäder zu erreichen, können die nacheinander angeordneten Abkühlbäder ein sukzessive niedrigere Temperatur aufweisen, d.h. ein zweites Abkühlbad kann niedriger temperiert sein als ein erstes Abkühlbad, ein drittes Abkühlbad kann niedriger temperiert als das zweite Abkühlbad usw.

Die zuvor genannte weitere Kühlvorrichtung und/oder Trocknungsvorrichtung, die dem Abförderer nach dem ersten oder einem weiteren Abkühlbad zugeordnet sind, können grundsätzlich verschieden ausgebildet sein. Beispielsweise können entsprechende Kühlmittel einen Luft- und/oder Gaskühler zur Beaufschlagung der vom Abförderer geförderten Materialbrocken mit Kühlluft oder Kühlgas umfassen. Alternativ oder zusätzlich kann ein Flüssigkeitskühler zur Beaufschlagung der vom Abförderer geförderten Materialbrocken mit Kühlflüssigkeit vorgesehen sein. Alternativ oder zusätzlich kann ein Kontaktkühler vorgesehen sein, beispielsweise in Gestalt eines gekühlten Förderbands.

Um eine Abtrocknung der gekühlten Materialbrocken zu erzielen, kann einer dem Abförderer nachgeordnete Trocknungsstation vorgesehen sein, die die vom Abförderer abgelegten Materialbrocken trocknet. Eine solche Trocknungsstation kann in vorteilhafter Weiterbildung einen Zentrifugaltrockner, einen Zyklonenabscheider oder auch einen Bewegungstrockner umfassen, der beispielsweise als Rüttler ausgebildet sein kann und die Materialbrocken rüttelt oder vibriert, um an den Materialbrocken noch anhaftende Flüssigkeitströpfchen mechanisch abzuschütteln.

Alternativ oder zusätzlich zu einer solchen dem Abförderer nachgeordneten Trocknungsstation kann auch ein Durchgangstrockner vorgesehen sein, der einem Abfördererabschnitt zugeordnet ist und die Materialbrocken abtrocknet, während diese abgefördert werden. Ein solcher Durchgangstrockner kann beispielsweise einen Lufttrockner beispielsweise in Form eines Gebläses, eines Absaugers und/oder eines Zyklonenabschneiders umfassen. Alternativ oder zusätzlich kann ein Strahlungstrockner vorgesehen sein, der die auf dem Abförderer beförderten Materialbrocken beispielsweise durch Infrarotstrahlung zumindest teilweise abtrocknet. Alternativ oder zusätzlich kann der Durchgangstrockner auch als Bewegungstrockner ausgebildet sein bzw. einen solchen aufweisen, beispielsweise in Form einer Rüttelbahn, die einen Teil des Abförderers bilden kann. Beispielsweise kann ein Abschnitt des Abförderers als Vibrationsförderer oder Rüttelförderer ausgebildet sein.

Um unerwünschte Reaktionen der aus dem Ableitkanal austretenden Schmelze bzw. der aus dem Zerteiler austretenden Schmelzebatzen bspw. in Form von Degradationseffekten oder dem Austritt flüchtiger Bestandteile der Schmelze zu vermeiden, kann dem Zerteiler ein Atmosphärenerzeuger zu- oder nachgeordnet sein, der die austretenden Schmelze bzw. die zerteilten Schmelzeportionen mit einer definierten Atmosphäre beaufschlagt. Eine solche Atmosphäre kann bspw. eine bestimmte chemische Zusammensetzung haben, bspw. ein Inert- oder Schutzgas umfassen bzw. daraus bestehen und/oder bestimmte Druckbedingungen umfassen. Beispielsweise kann die austretende Schmelze und/oder ein entsprechend zerteilter Schmelzebatzen mit einem Schutzgas beaufschlagt werden oder auch mit Luft unter Druck gesetzt werden, das heißt einem Überdruck ausgesetzt werden, oder auch einem Unterdruck oder einem Vakuum ausgesetzt werden.

Je nach gewünschter Atmosphäre, in die die Schmelzeportionen austreten sollen, kann der Atmosphärenerzeuger verschiedene Beaufschlagungsmittel umfassen. In Weiterbildung der Erfindung kann der Austrittsbereich des Zerteilers mit einer Gasdusche beaufschlagt werden bzw. versehen sein, bspw. um die zerteilten Schmelzebatzen mit einem Schutzgas zu beaufschlagen. Alternativ oder zusätzlich kann der Austrittsbereich des Zerteilers abgekapselt ausgebildet sein, um zu verhindern, dass die Schmelzeportionen mit der Umgebungsatmosphäre in Berührung gelangen oder umgekehrt aus der Schmelze austretende, flüchtige Bestandteile in die Umgebungsatmosphäre gelangen.

Eine solche Kapselung kann bspw. durch einen vorzugsweise gasdichten Behälter realisiert sein, der an den Zerteiler angeschlossen ist, sodass die zerteilten Schmelzeportionen in den Innenraum des Behältnisses gelangen. Je nach erfolgender Nachbehandlung kann das genannte Behältnis an eine nachfolgende Behandlungsstation angeschlossen sein bzw. auch diese umhüllen, bspw. mit der Wanne des vorgenannten Flüssigkeits-Tauchbades verbunden sein und/oder mit der genannten Badewanne eine vorzugsweise gasdichte Hülle bilden, die an den Zerteiler oder ein im Bereich des Zerteilers befindliches Anlagenbauteil angeschlossen sein kann.

Hierzu wird ausgangs der Portioniervorrichtung ein Behälter vorgesehen, der entsprechend umfassend die Schmelzeportionen aufnimmt und dabei diese Portionen von einer definierten Atmosphäre, einem definierten Überdruck aus beispielsweise Druckluft oder einem geeigneten Schutzgas inertisiert wird. Diese Gas kann entweder mit Neutraldruck fließen um die austretenden flüchtigen Bestandteile aufzunehmen und / oder Degradationseffekten entgegenzuwirken, oder aber mittels Überdruck diese Bestandteile in den Schmelzeportionen weitestgehend einschließen. Das Prinzip dieser Bestreichung und / oder Überdruck mit dem Gas oder Druckluft ist variabel umsetzbar.
Lässt sich der Behälter unterhalb des Portionierers nicht so groß dimensionieren, dass alle Portionen aufgenommen werden und dabei sowohl ausreichend auskühlen als auch "Entgasen" können, können auch die Nachfolgebehälter und Förderer in gleicher Weise beaufschlagt werden, um die vorbenannten Effekte zu verhindern.

Die Erfindung wird nachfolgend anhand bevorzugter Ausführungsbeispiele und zugehöriger Zeichnungen näher erläutert. In den Zeichnungen zeigen:
- Fig. 1:: eine schematische Darstellung einer Schmelzeverarbeitungsanlage in Form einer Unterwassergranulieranlage nach einer vorteilhaften Ausführung der Erfindung, bei der ein Schmelzebeschicker über ein Anfahrventil einen Unterwassergranulierkopf mit Schmelze beschickt, indem die Schmelze zu Granulat pelletiert wird,
- Fig. 2:: eine schematische Darstellung des Anfahrventils, der dem Anfahrventil zugeordneten Portioniereinrichtung und der der Portioniereinrichtung zu- und nachgeordneten Kühlvorrichtung zum Abkühlen der vom Anfahrventil abgeleiteten und portionierten Schmelzeportionen, sowie des Abförderers zum Abfördern der verfestigten Materialbrocken,
- Fig. 3:: eine schematische Seitenansicht des Zerteilerkopfs der Portioniervorrichtung, wobei der hin und her bewegliche Schlitten und der hierfür vorgesehen Schlittenantrieb zu sehen sind,
- Fig. 4:: eine perspektivische Teilschnittansicht aus Fig. 3, die die Konturierung und die verschiedenen Ausgänge der mehreren Schmelzekanäle zeigt,
- Fig. 5:: eine Schrägansicht des Zerteilerkopfs in einen der Schmelzekanäle hinein, wobei die Einlasskonturierung des Schmelzekanals des Verteilerkopfs und die Auslasskontur des damit strömungsverbundenen Ableitkanals gezeigt sind,
- Fig. 6:: eine perspektivische Explosionsdarstellung des Zerteilers aus den Fig. 3-5,
- Fig. 7:: eine Schnittansicht verschiedener Düseneinsätze der Portioniervorrichtung aus den Fig. 3-6,
- Fig. 8:: eine Seitenansicht einer dem Anfahrventil zugeordneten Portioniervorrichtung nach einer weiteren vorteilhaften Ausführung der Erfindung, bei der ein rotatorisch antreibbarer Verteilerkopf vorgesehen ist,
- Fig. 9:: eine Draufsicht der Portioniervorrichtung aus Fig. 8, die den Zerteilerkopf von unten zeigt,
- Fig. 10:: eine schematische Darstellung verschiedener Ausführungsformen des Abförderers zum Abfördern der portionierten Schmelze bzw. Material-brocken, wobei die Teilansicht a) eine Ausführung des Abförderers zum Einsammeln von in einem Abkühlbad schwimmenden Materialbrocken zeigt, die Teilansicht b) eine Ausführung des Abförderers für in einem Abkühlbad nicht schwimmende Materialbrocken zeigt und die Teilansicht c) eine Ausführung des Abförderers für Luft- bzw. Sprühkühlung zeigt, und
- Fig. 11:: eine schematische Darstellung einer Schmelzeverabeitungsanlage ähnlich Fig. 1 nach einer weiteren Ausführung der Erfindung, wobei der Zerteiler sowie nachfolgende Förder- und Weiterverabeitungseinrichtungen gasdicht gekapselt sind, um die zerteilten Schmelzeportionen vor Reaktion mit der Umgebungsatmosphäre zu schützen und den Austritt von flüchtigen Bestandteilen an die Umgebung zu verhindern, und
- Fig. 12:: eine schematische Schaltkreisdarstellung für die Steuerung der Gas- und/oder Druckluftbeaufschlagung des gekapselten Bereichs der Anlage aus Fig. 11.

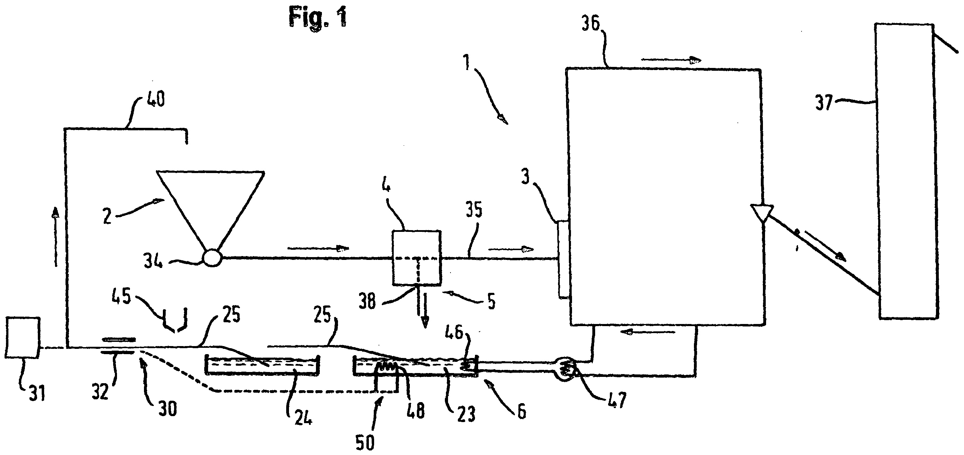

Wie Fig. 1 zeigt, kann eine Schmelzeverarbeitungsanlage nach einem Ausführungsbeispiel der Erfindung als Unterwassergranulieranlage 1 ausgebildet sein. Ein Schmelzebeschicker 2, der beispielsweise einen Extruder 34 umfassen kann, versorgt über einen Versorgungskanal 35 einen Granulierkopf 3 des Unterwassergranulierers mit Schmelze, die in an sich bekannter Weise im Granulierkopf 3 durch eine Lochplatte mit einer Vielzahl von Bohrungen gedrückt und durch ein Granuliermesser in Pellets zerschnitten wird, die vom Wasserkreislauf 36 der Granulieranlage 1 vom Granulierkopf 3 abtransportiert werden und in einen Trockner beispielsweise einem Zentrifugaltrockner 37 gelangen können, indem sie getrocknet werden.

Um die Schmelze beim Anfahren des Prozesses oder während einer Umrüstphase an dem Granulierkopf 3 vorbei ableiten zu können, ist zwischen dem Schmelzebeschicker 2 und dem Granulierkopf 3 ein Anfahrventil 4 vorgesehen, das in der Betriebsstellung den Versorgungskanal 35 zwischen Schmelzebeschicker 2 und Granulierkopf 3 durchschaltet, in der Anfahr- bzw. Ableit- oder Bypassstellung die vom Schmelzebeschicker 2 kommende Schmelze hingegen ableitet. Hierzu umfasst das Anfahrventil 4 neben zumindest einem Eingangskanal und zumindest einem Beschickungskanal zumindest einen Bypasskanal mit einer Ableitöffnung 38, vgl. Fig. 1. Das Anfahrventil 4 könnte auch mehrere Eingangskanäle und/oder mehrere Beschickungskanäle besitzen, um ggf. mehrere Schmelzebeschicker 2 mit mehreren Granulierköpfen 3 verbinden bzw. die Schmelze im bestimmungsgemäßen Funktionszustand auf verschiedene Verarbeitungsköpfe verteilen zu können.

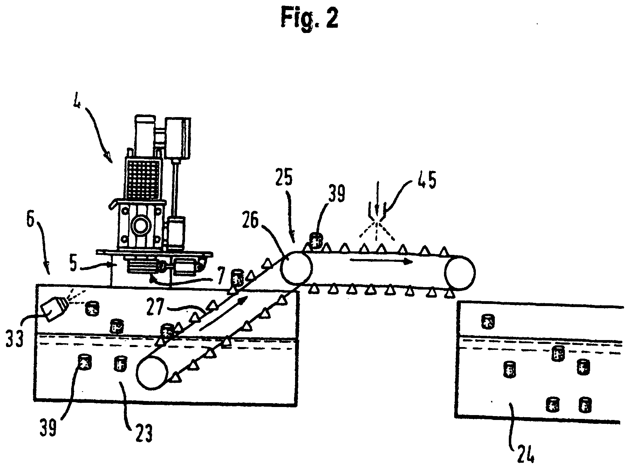

Wie Fig. 2 zeigt, ist dem Anfahrventil eine Portioniervorrichtung 5 zugeordnet, die die abgeleitete Schmelze in handliche Schmelzeportionen portioniert, insbesondere den aus der Ableitöffnung 38 des Anfahrventils 4 austretenden Schmelzestrang in jeweils etwa gleichgroße Schmelzebatzen zerteilt, die dann durch Abkühlen zumindest teilweise verfestigen und Materialbrocken 39 bilden, die nach weiterer Abkühlung und Trocknung in einem Recyclingkreislauf 40 wieder verarbeitet werden können, beispielsweise dem Schmelzeerzeuger zugeführt werden können. Alternativ zu einer direkten Rückführung der Materialbrocken 39 in den Schmelzeerzeuger können die Materialbrocken 39 jedoch auch in anderer Weise recycelt bzw. weiterverarbeitet werden. Beispielsweise können sie zunächst auch nur zwischengelagert werden, um dann je nach späteren Bedarf die Verwendung festlegen zu können. Die Materialbrocken 39 müssen hierbei auch nicht der Verarbeitungsanlage, aus der sie abgeleitet wurde, wieder zugeführt werden. Vielmehr können die Materialbrocken 39 auch anderen Verwendungen zugeführt werden, beispielsweise für eine Rohrextrusion oder anderen Anwendungen, in denen entsprechendes Material benötigt wird, wobei hier gegebenenfalls weitere Vor- oder Zwischenverarbeitungsschritte vorgenommen werden können, beispielsweise eine Zerkleinerung oder eine Mischung mit anderen Stoffen.

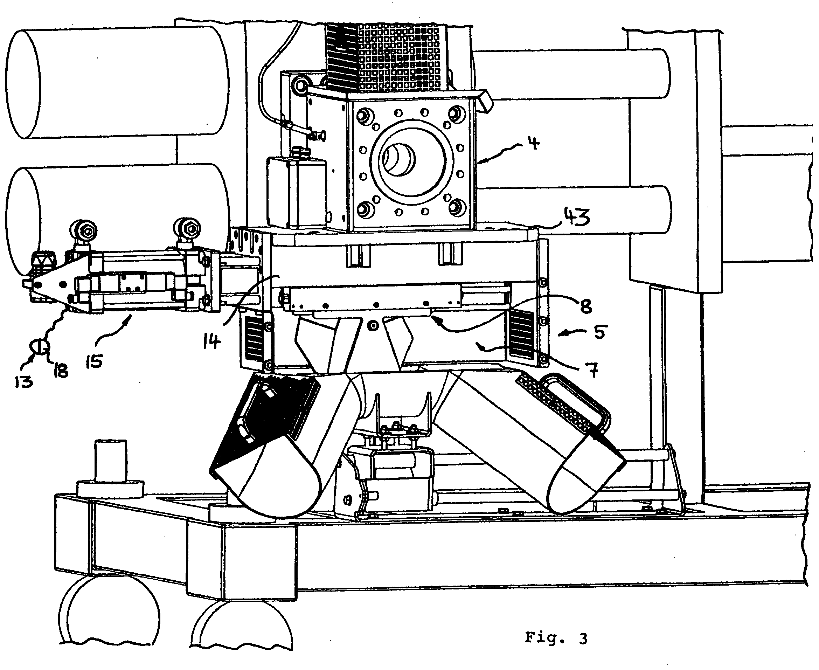

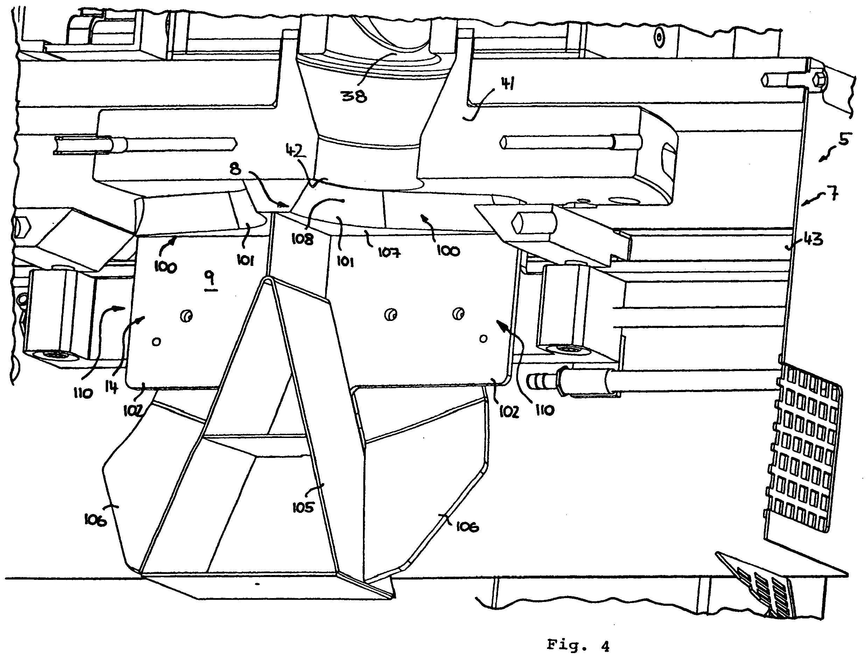

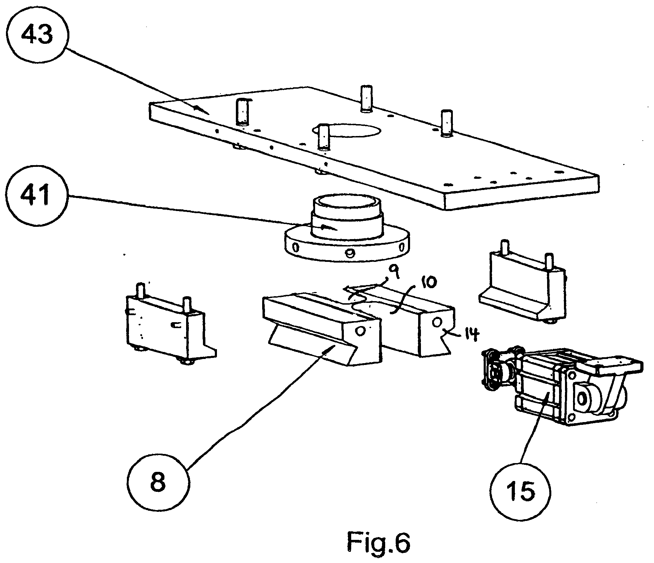

Die Portioniervorrichtung 5, die an der Ableitöffnung 38 des Anfahrventils 4 angeordnet ist, kann nach einer ersten Ausführungsform, die in den Fig. 3-7 gezeigt ist, einen relativ zum Anfahrventil 4 beweglich gelagerten Zerteilerkopf 8 aufweisen, der Teil eines Schlittens 14 ist, der relativ zum Anfahrventil 4 linear hin- und her verfahren werden kann. Der besagte Zerteilerkopf 8 umfasst mehrere Schmelzekanäle 9 und 10, die voneinander separat ausgebildet sind und verschiedene Mündungsbereiche haben. Mit ihren Eintrittsöffnungen liegen die beiden Schmelzekanäle 9 und 10 unmittelbar nebeneinander, vgl. Fig. 4, während die Auslassbereiche der Schmelzekanäle 9 und 10 voneinander beabstandet sind. Dies wird durch eine unterschiedlich geneigte Kanalführung erzielt, vgl. Fig. 4.

Durch den Schlitten 14 kann der Zerteilerkopf 8 derart relativ zum Anfahrventil 4 hin und her bewegt werden, dass die beiden Schmelzekanäle 9 und 10 mit ihrem Eingangsbereich über die Ableitöffnung 38 des Anfahrventils 4 fahren und je nach Stellung des Schlittens 14 einmal der eine Schmelzekanal 9 und ein anderes Mal der andere Schmelzekanal 10 mit der genannten Ableitöffnung 38 in Strömungsverbindung gerät. Der jeweils andere Schmelzekanal 9 gerät hierbei außer Strömungsverbindung, so dass er vom abgeleiteten Schmelzestrom abgeschnitten wird.

Die Schmelzekanäle 9 und 10 des Schlittens 14 müssen hierbei nicht unmittelbar mit der Ableitöffnung 38 des Anfahrventils 4 in Eingriff bzw. Strömungsverbindung kommen. Vorteilhafterweise kann der Zerteiler 7 ein Zwischen- bzw. Adapter- oder Anschlussstück 41 in Form eines Düseneinsatzes umfassen, das an dem Anfahrventil 4 feststehend montiert wird und mit der genannten Ableitöffnung 38 in Strömungsverbindung steht. Der Schlitten 14 fährt relativ zu dem Zwischenstück 41 hin und her, so dass die Schmelzekanäle im Zerteilerkopf 8 mit der Düsenöffnung des Düseneinsatzes des Adapterstücks 41 in Strömungsverbindung kommen bzw. hiervon außer Strömungsverbindung gelangen.

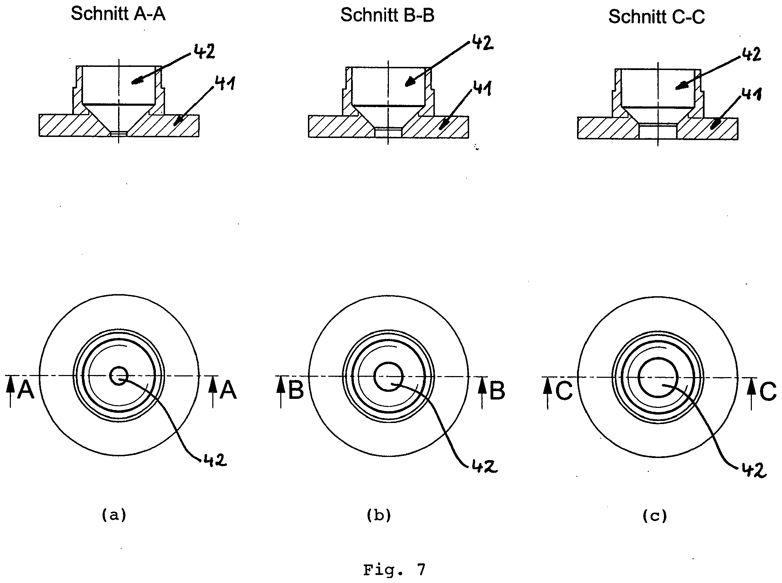

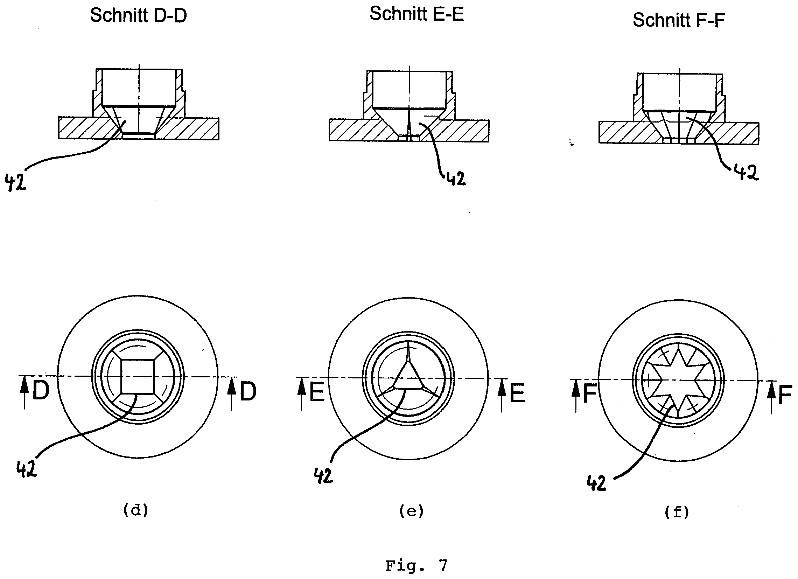

Wie Fig. 4 und Fig. 7 zeigt, kann der Einlass der Zerteilerbaugruppe, der von dem genannten Adapterstück 41 gebildet sein kann, einen Ableitkanal 42 umfassen, der sich in Strömungsrichtung im Querschnitt verjüngt und den Auslassquerschnitt der Ableitöffnung 38 des Anfahrventils 4 auf einen deutlich geringeren Durchmesser verjüngt.

Wie Fig. 7 zeigt, können hierbei unterschiedliche Querschnittsverläufe vorgesehen sein, wobei die Verjüngung vorteilhafterweise über einen im Wesentlichen konischen Kanalabschnitt erzielt wird, der einen Einlassbereich größeren Querschnitts auf einen Düsenauslassbereich kleineren Querschnitts verjüngt. Der Durchgangsquerschnitt des Adapterstücks 41 kann hierbei insbesondere an die Viskosität der abgeleiteten Schmelze angepasst werden, wobei gegebenenfalls auch Durchmessererweiterungen möglich sein können. Für eine Mehrzahl von Schmelzen wird jedoch eine düsenförmige Querschnittsverjüngung hilfreich sein, insbesondere bei üblichen Schmelzen wie sie in Unterwassergranulierungen Verwendung finden. Vorteilhafterweise kann der Auslassquerschnitt des Düseneinsatzes je nach Material und Viskosität der Schmelze weniger als 75%, vorzugsweise weniger als 50% und insbesondere etwa 25%-50% des Einlassquerschnittes betragen, vgl. Fig. 7.

Wie die verschiedenen Darstellungen a-f der Fig. 7 zeigen, kann der genannte Ableitkanal 42 verschiedene Querschnittskonturierungen besitzen, bspw. in Form von runden, insbesondere kreisrunden Querschnitten, wie sie die Fig. 7a-7c zeigen, oder auch in Form von eckigen Konturierungen, wie sie die Fig. 7d-7f zeigen, in denen beispielhaft eine quadratische, eine dreieckige und eine sternförmige Querschnittskontur des Ableitkanals 42 gezeigt sind. Es versteht sich jedoch, dass auch andere Querschnittskonturierungen vorgesehen sein können, wie eingangs erläutert, um in der gewünschten Weise die Schmelzebatzen zu formen, bspw. runde, zylindrische oder im weiteren Sinne kugelförmig oder elliptische Schmelzebatzen zu erzeugen.

Wie die Fig. 3-6 zeigen, kann der Schlitten 14 an einem vorzugsweise plattenförmigen Träger 43 linear verschieblich geführt bzw. gelagert sein, wobei der genannte Träger 43 das vorgenannte Adapterstück 41 trägt bzw. aufweist und an das Anfahrventil 4 montierbar ist. Hierzu kann der genannte Träger 43 vorteilhafterweise eine die Kontur des Anfahrventils 4 angepasste Montagefläche besitzen.

Um den Schlitten 14 hin- und hergehend antreiben zu können, kann ein Schlittenantrieb 15 vorgesehen sein, der in der gezeichneten Ausführungsform als Druckmittelzylinder ausgebildet ist, jedoch auch in anderer Weise ausgeführt sein kann, wie dies eingangs erläutert wurde. Wie Fig. 3 zeigt, kann der Schlittenantrieb 15 einerseits mit dem Schlitten 14 verbunden sein und andererseits an dem Träger 43 angelenkt sein.

Durch ein Hin- und Herfahren des Schlittens 14 gelangen die mehreren Schmelzekanäle 9 und 10 im Zerteilerkopf 8 zueinander wechselweise in Strömungsverbindung mit der Ableitöffnung 38. Wenn ein Schmelzekanal mit der Ableitöffnung in Strömungsverbindung steht, ist der jeweils andere Schmelzekanal außer Strömungsverbindung. Hierdurch wird der austretende Schmelzestrang in entsprechende Stückchen zerteilt. Durch eine nur schematisch dargestellte Steuereinrichtung 13 wird der Schlittenantrieb 15 in der gewünschten Weise angesteuert, um die Schmelzezerteilung in der gewünschten Weise zu erzielen. Insbesondere können Steuermittel 18 die Antriebsgeschwindigkeit und -frequenz variieren, um die Portionsgröße zu variieren bzw. in der gewünschten Weise zu steuern bzw. auf eine gewünschte Portionsgröße einzuregeln.

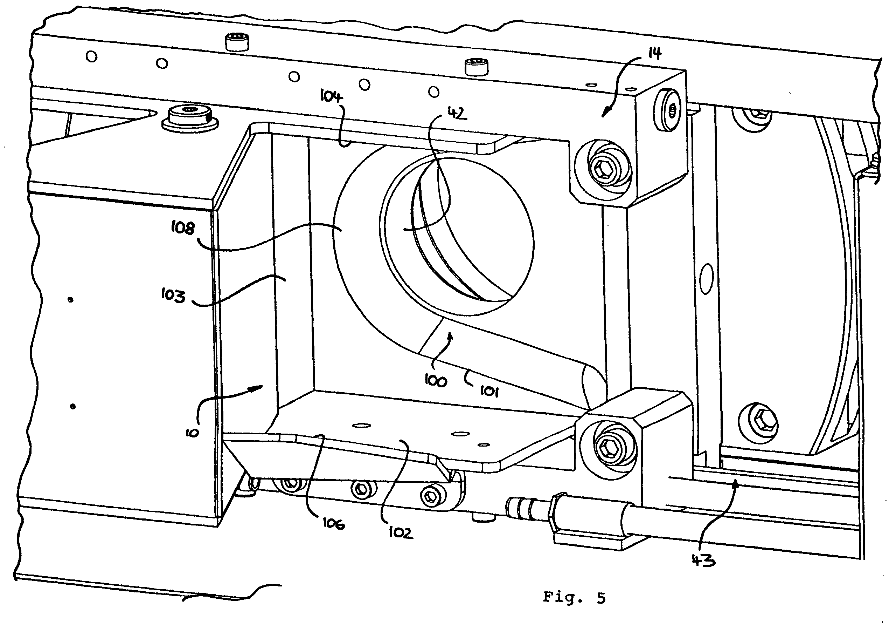

Wie die Figuren 4 und 5 am besten zeigen, sind die Schmelzekanäle 9 und 10 hinsichtlich Querschnittsform und Querschnittsbemaßung gegenüber dem Ableitkanal 42, der vom Anfahrventil 4 her kommt, deutlich anders bemessen und ausgebildet. Insbesondere besitzen die Schmelzekanäle 9 und 10 im bewegbaren Zerteilerkopf 8 eine um ein Vielfaches größere Querschnittsfläche als der Austrittsquerschnitt des genannten Ableitkanals 42.

In ihren Einströmabschnitten, die an den Austrittsquerschnitt des Ableitkanals 42 anschließen, besitzen die Schmelzekanäle 9 und 10 eine stufenförmige Querschnittserweiterung, die einen Überhang bildet, welcher als Abrisskante fungiert, um die in die Schmelzekanäle 9 und 10 eintretende Schmelze von den Wandungen des Zerteilerkopfes 8 abzulösen.

Im Bereich der genannten Querschnittserweiterung 100 vergrößert sich nicht nur sprunghaft die Querschnittsfläche der Schmelzekanäle 9 und 10, sondern auch deren Querschnittsform. Wie insbesondere Fig. 4 und Fig. 5 zeigen, sind die Schmelzekanäle 9 und 10 einlassseitig durch einen Einlasssteg 101 begrenzt, der sich in Einströmrichtung trichterförmig bzw. konisch erweitert. An den genannten Einlasssteg bzw. Einlasskragen 101 anschließend erweitert sich der Kanalquerschnitt sprunghaft, wobei die genannten Schmelzekanäle 9 und 10 stromab des genannten Einlasskragens 101 eine mehreckige, insbesondere rechteckige Konturierung besitzen.

Unmittelbar an den Einlasskragen 101 anschließend besitzt jeder der Schmelzekanäle 9 und 10 eine näherungsweise quaderförmige Konturierung, die dann zum Auslass der Schmelzekanäle 9 und 10 hin in eine angeschrägte, facettierte Querschnittskonturierung übergeht, d.h. die zunächst im Wesentlichen senkrecht ausgerichteten Seitenwandungen 102, 103 und 104 werden durch schräg gestellte, zur Vertikalen angestellte Kanalwandungen 105, 106 übergehen.

Der an den Einlasskragen 101 anschließende Kanalabschnitt der Schmelzekanäle 9 und 10 ist gegenüber dem Einlasskragen 101 jeweils zurückgesetzt bzw. im Querschnittsmaß deutlich größer, so dass zwischen Einlasskragen und sich anschließendem, eckigem Kanalabschnitt ein Hinterschnitt 107 ergibt, vgl. Fig. 4.

Wie die Figuren 4 und 5 zeigen, sind die Einlasskrägen 101 der Schmelzekanäle 9 und 10 jeweils parabelförmig bzw. V-förmig, genauer gesagt in Form eines abgerundeten Vs konturiert, so dass die vom Einlasssteg bzw. Einlasskragen 101 definierte Einlassöffnung der Schmelzekanäle 9 und 10 sich zu den gegenüberliegenden Stirnseiten des Schlittens 14 hin erweitern, d.h. die Schenkel des genannten Vs laufen symmetrisch zur Schlittenverfahrrichtung auseinander, wobei der Verbindungsabschnitt der Schenkel des Vs bzw. der Parabel zum Übergangsbereich zwischen den beiden Schmelzekanälen 9 und 10 hin angeordnet ist. Der besagte Übergangsbereich zwischen den auseinander laufenden Schenkeln der Einlassöffnung ist dabei an die Querschnittskontur des Ableitkanals 42 angepasst, vgl. Fig. 5, so dass beim Öffnen, genauer gesagt beim Erreichen der vollständig geöffneten Stellung des jeweiligen Schmelzekanals 9 und 10 ein abruptes Aufsteuern des Kanalquerschnitts erfolgt.

Die Querschnittssektoren 108 der Einlassöffnung der Schmelzekanäle 9 und 10, die an den Ableitkanal 42 formangepasst sind, liegen dabei auf der Seite der Schmelzekanäle 9 und 10, die beim Öffnen der Schmelzekanäle 9 und 10 den Ableitkanal 42 zuerst aufmachen. Betrachtet man den in Fig. 5 gezeigten Schmelzekanal 10, fährt der Schmelzekanal 10 bzw. der Schlitten 14 beim Öffnen des besagten Schmelzekanals 10 nach links, wobei der linke Randbereich der Einlassöffnung des Schmelzekanals 10 in besagter Weise formangepasst an den Auslassquerschnitt des Ableitkanals 42 ist. Entgegen der Öffnungsrichtung, d.h. gemäß Fig. 5 nach rechts laufen die Schenkel des Einlasskragens 101 bzw. der davon definierten Einlassöffnung des Schmelzekanals 10 auseinander.

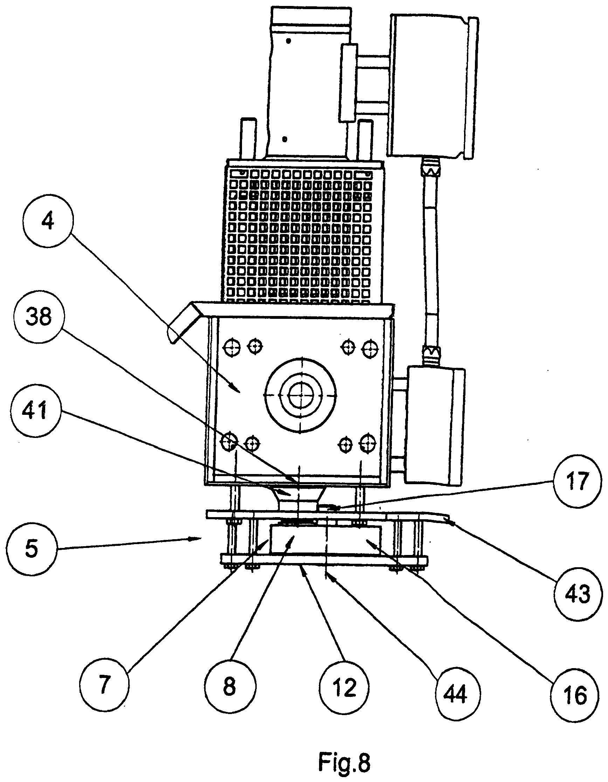

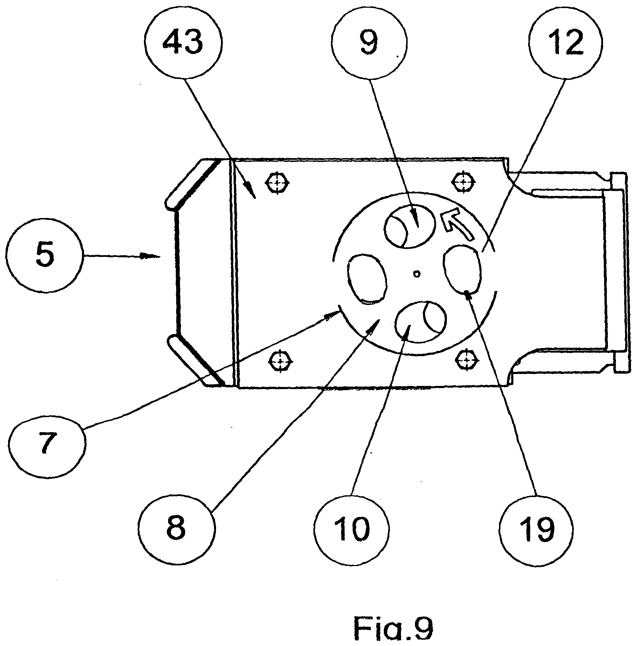

Alternativ zu der in den Fig. 3-7 gezeigten Schlittenlösung kann der Zerteiler 7 auch einen rotatorisch beweglichen Zerteilerkopf 8 umfassen, wie dies die Ausführung nach den Fig. 8 und 9 zeigt. Der Zerteilerkopf 8 kann im Wesentlichen plattenförmig ausgebildet sein und mehrere Durchgangsbohrungen aufweisen, die Schmelzekanäle 9 und 10 bilden, wobei die Anzahl der Schmelzekanäle variieren kann. Vorteilhafterweise sind hier zumindest zwei Schmelzekanäle vorgesehen, wobei jedoch auch mehr als zwei Schmelzekanäle Verwendung finden können. In der gezeichneten Ausführung sind vier solcher Schmelzekanäle in dem Zerteilerkopf 8 ausgebildet.

Die Schmelzekanäle 9 und 10 sind hierbei auf einem gemeinsamen Teilungskreis um die Rotationsachse 44 herum angeordnet, so dass sie bei Drehung des Zerteilerkopfs 8 auf derselben Umlaufbahn umlaufen. Die Drehachse 44 ist hierbei im Wesentlichen parallel zur Längsrichtung des Ableitkanals des Anfahrventils 4 und/oder im Wesentlichen parallel zur Längsrichtung der Düsenöffnung des Zwischenstücks 41 ausgerichtet. Wie bei der vorhergehenden Ausführung kann vorteilhafterweise nämlich auch bei der Ausführung nach Fig. 8 und 9 ein Adapterstück 41 Verwendung finden, welches starr auf die Ableitöffnung 38 des Anfahrventils 4 montierbar ist, insbesondere mittels des schon erläuterten Trägers 43, an dem der Zerteilerkopf 8 beweglich gelagert ist.

Durch Drehung des Zerteilerkopfes 8 gelangt jeweils ein anderer Schmelzekanal 9 bzw. 10 mit der Düsenöffnung des Zwischenstücks 41 und damit mit der Ableitöffnung 38 des Anfahrventils 4 in Strömungsverbindung, während die jeweils anderen Schmelzekanäle von der ausströmenden Schmelze abgeschnitten sind. Hierdurch wird in entsprechender Weise eine Portionierung des austretenden Schmelzestrangs erzielt. Durch Variierung der Drehgeschwindigkeit des Zerteilerkopfs 8 bzw. der Frequenz, mit der der Zerteilerkopf 8 rotatorisch weitergestellt wird, kann auch hier die Schmelzeportionsgröße eingestellt werden. Die Drehung des Zerteilerkopfes 8 kann durch einen geeigneten Drehantrieb 17 erfolgen, der grundsätzlich verschieden ausgebildet sein kann, beispielsweise in Form eines Elektromotors mit einer zugeordneten Getriebestufe, um die gewünschte Drehzahl einstellen und gegebenenfalls auch variieren zu können.

Die Schmelzekanäle dieses rotatorischen Zerteilerkopfes 8 sind analog der zuvor beschriebenen Ausführung gemäß den Figuren 3-5 ausgebildet, so dass auf die vorstehende Ausführung verwiesen wird.

Der Zerteilerkopf 8 und das Zwischen- bzw. Anschlussstück 41 können insbesondere im Bereich der Schmelzekanäle 9 und 10 und des Ableitkanals 42 und vorteilhafterweise auch im Bereich der Reibpaarungen bildenden Oberflächen, ggf. auch vollständig mit einer Funktionsschicht bzw. einer funktionalen Oberflächenschicht beschichtet sein, um ein Ablösen der Kunststoffschmelze zu unterstützen und Anklebungen zu vermeiden, aber auch Verschleiß und Abnutzungen an den Reibpaarungsoberflächen zu vermeiden bzw. zumindest zu reduzieren. Der Zerteilerkopf 8 und das genannte Zwischen- bzw. Anschlussstück 41 können dabei vorteilhafterweise aus geeigneten wärmefesten Stählen gefertigt sein.

Wie Fig. 2 zeigt, kann die Kühlvorrichtung 6 insbesondere Kühlmittel 33 umfassen, die die Schmelze unmittelbar beim Portionieren oder unmittelbar nach dem Portionieren kühlen. Die genannten Kühlmittel 33 können hierbei beispielsweise als Sprühkühlmittel ausgebildet sein, die eine Kühlflüssigkeit auf den austretenden Schmelzestrang sprühen, der aus dem Zerteiler 7 austritt. Alternativ oder zusätzlich können die genannten Kühlmittel 33 auch einen Luft- bzw. Gaskühler umfassen, der Kühlluft bzw. Kühlgas auf den Schmelzestrang richtet. Wiederum alternativ oder zusätzlich können die Kühlmittel 33 auch einen Kontaktkühler umfassen, der eine mit dem Schmelzestrang in Kontakt tretende Kühlfläche besitzt. Beispielsweise kann der Zerteilerkopf 8 und/oder das Anfahrventil 4, insbesondere dessen Ableitseite in geeigneter Weise gekühlt werden, beispielsweise durch eine Flüssigkeitskreislaufkühlung, so dass die Schmelze bereits vorgekühlt wird, wenn sie portioniert wird, so dass die Schmelze gegebenenfalls auch schon mit der Verfestigung begonnen hat, wenn sie portioniert wird.

Weiterhin umfasst die Kühlvorrichtung 6 vorteilhafterweise zumindest eine der Portioniervorrichtung 5 nachgeordnete Kühlstation, insbesondere in Form eines Abkühlbads 23, das unterhalb der Portioniervorrichtung 5 angeordnet ist, so dass die zerteilten Schmelzeportionen direkt durch Schwerkraft in das genannte Abkühlbad fallen können. Das Abkühlbad 23 kann je nach Bedarf einkreisig oder auch zweikreisig in der eingangs beschriebenen Weise ausgebildet sein, um die gewünschte Kühlmitteltemperatur aufrecht erhalten zu können. In dem genannten Abkühlbad 23 wird eine Verfestigung der Schmelzeportionen zu handhabbaren Materialbrocken 39 bewirkt.

Wird als Verarbeitungsanlage eine Unterwassergranulierung verwendet, wie Fig. 1 zeigt, kann vorteilhafterweise auch der Wasser- bzw. Flüssigkeitskreislauf 36 der Unterwassergranulierung dazu verwendet werden, dass Abkühlbad 23 und/oder ein weiteres Abkühlbad 24 zu temperieren und/oder zu kühlen. Wie Fig. 1 zeigt, kann über Wärmetauscher 46 und 47 aus dem Abkühlbad 23 Wärme abgeführt und zur Vorwärmung des Wasserkreislaufs 36 verwendet werden, wobei der genannte Wasserkreislauf 36 und dessen Kühlmittel auch einfach nur dazu verwendet werden können, bei Bedarf das Abkühlbad 23 zu kühlen bzw. zu temperieren. Alternativ oder zusätzlich kann die über einen Wärmetauscher 48 dem Abkühlbad 23 und/oder dem Abkühlbad 24 entzogene Wärme auch dazu verwendet werden, in einer nachgeordneten Trocknungsstation 30 beispielsweise dort verwendete Trocknungsluft vorzuwärmen.

Um die Materialbrocken 39 von der Flüssigkeit des Abkühlbads 23 separieren zu können, ist in Weiterbildung der Erfindung ein Abförderer 25 vorgesehen, der vorteilhafterweise als Bandförderer 26 ausgebildet sein kann und vorteilhafterweise einen im Abkühlbad 23, insbesondere unterhalb dessen Pegel, verlaufenden Bandabschnitt und einen außerhalb des Abkühlbads 23 verlaufenden Bandabschnitt umfassen kann.

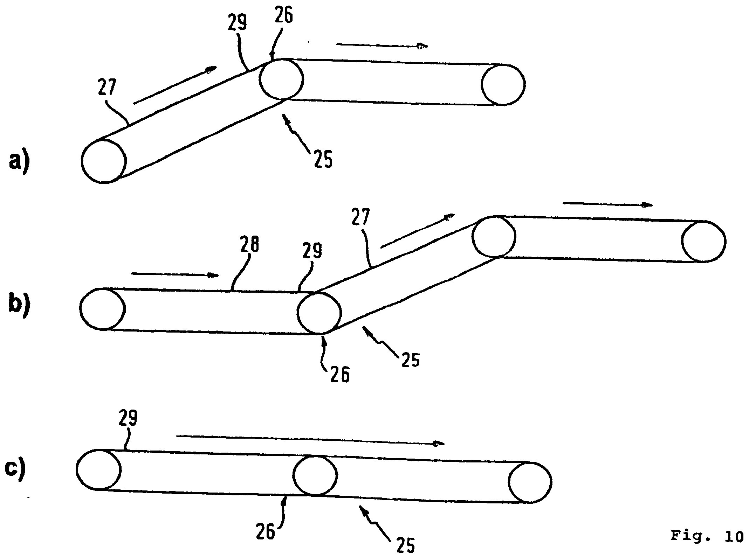

Wie Fig. 10 zeigt, kann der Bandförderer 26 vorteilhafterweise einen spitzwinklig zur Horizontalen geneigten Sammelabschnitt 27 umfassen, der durch den Pegel des Abkühlbads 23 hindurchtritt und auf dem Abkühlbad 23 schwimmende Materialbrocken 39 einsammelt und aus dem Abkühlbad 23 herausfördert, vgl. Fig. 10, dort Teilansicht a).

Alternativ oder zusätzlich kann der genannte Bandförderer 26 auch einen auf dem Boden des Abkühlbads 23 angeordneten Sammelabschnitt 28 umfassen, um untergehende bzw. absinkende Materialbrocken 39 sammeln und abtransportieren zu können. Ein solcher bodenseitiger Sammelabschnitt 28 kann gegebenenfalls mit einem Sammelabschnitt 27 zum Einsammeln und Abtransportieren schwimmender Materialbrocken 39 kombiniert werden, vgl. Teilansicht b) der Fig. 10.

Alternativ oder zusätzlich kann auch eine im Wesentliche ebene Ausbildung des Abförderers 25 vorgesehen sein, beispielsweise wenn auf ein Abkühlbad 23 verzichtet und stattdessen eine Luft- oder Sprühkühlung vorgesehen wird.

Eine solche Luft- und Sprühkühlung kann auch vorgesehen sein, wenn ein Abkühlbad 23 vorgesehen ist, beispielsweise im Bereich des außerhalb des Abkühlbads 23 verlaufenden Abschnitts des Abförderers 25. Solche weiteren Kühlmittel 45 zur Kühlung der aus dem Abkühlbad 23 heraustransportierten Materialbrocken 29 zeigt Bezugsziffer 45 in Fig. 2.

Alternativ oder zusätzlich dem Abkühlbad 23 ein weiteres Abkühlbad 24 nachgeordnet sein, welches vorteilhafterweise ein größeres Volumen als das erste bzw. vorhergehende Abkühlbad 23 und/oder eine niedrigere Kühlmediumtemperatur besitzen kann.

Wie Fig. 1 zeigt, ist dem weiteren Abkühlbad 24 erneut ein Abförderer 25 zugeordnet, um die erneut tauch- und/oder schwimmgekühlten Materialbrocken 39 aus dem Bad separieren und abfördern zu können.

Nach dem letzten Abkühlbad können dem Abförderer 25 weitere Kühlmittel, insbesondere aber auch eine Trocknungsvorrichtung 30 zugeordnet oder nachgeordnet sein. Diese Trocknungsvorrichtung 30 kann in der eingangs beschriebenen Weise eine stationäre Trocknungsstation 31 beispielsweise in Form eines Zentrifugaltrockners sein, in die der Abförderer 25 die Materialbrocken 39 zur Trocknung gibt. Alternativ oder zusätzlich kann die Trocknungsvorrichtung 30 auch im Durchlauf arbeiten und einen Durchgangstrockner 32 umfassen, durch den der Abförderer 25 die Materialbrocken 39 hindurchfördert, d.h. die Materialbrocken 39 werden getrocknet, während sie ab- bzw. weitergefördert werden. In der eingangs beschriebenen Weise kann ein solcher Durchgangstrockner 32 beispielsweise eine Gebläsekühlung oder eine Sprühkühlung oder dergleichen umfassen.

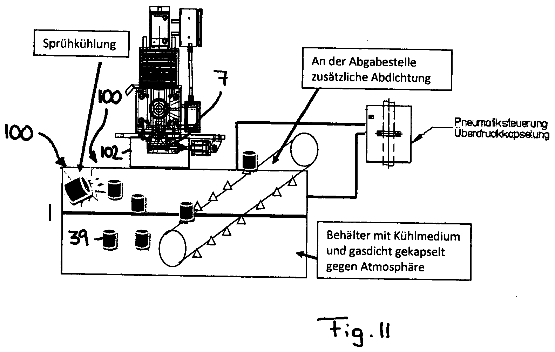

Wie Fig. 11 zeigt, kann dem Zerteiler 7 ein Atmosphärenerzeuger 100 zum Beaufschlagen der zerteilten bzw. zu zerteilenden Schmelzeportionen 39 mit einer definierten Atmosphäre zu- bzw. nachgeordnet sein.

Der genannte Atmosphärenerzeuger 100 kann insbesondere eine im Wesentlichen gasdicht ausgebildete Kapselung 101 umfassen, mittels derer der Zerteiler 7 und dessen nachfolgender Austrittsbereich umkapselt werden und gegenüber der Umgebungsatmosphäre abgeschirmt werden.

Insbesondere kann der Zerteiler 7 von einem Behältnis 102 umschlossen sein, in dem ein Überdruck und/oder eine Schutzgasbeaufschlagung oder eine andere Atmosphärenbeaufschlagung, bspw. auch ein Vakuum vorgesehen sein könnte.

Wie Fig. 11 weiterhin zeigt, können auch nachgeordnete Anlagenbausteine wie bspw. das Abkühlbad 23 und/oder der Abförderer 25 von ähnlichen Behältnissen oder auch von dem genannten Behältnis 102, wenn dieses groß genug ausgebildet wird, umschlossen sein, wobei verschiedene Behältnisabschnitte miteinander gasdicht verbunden werden können.

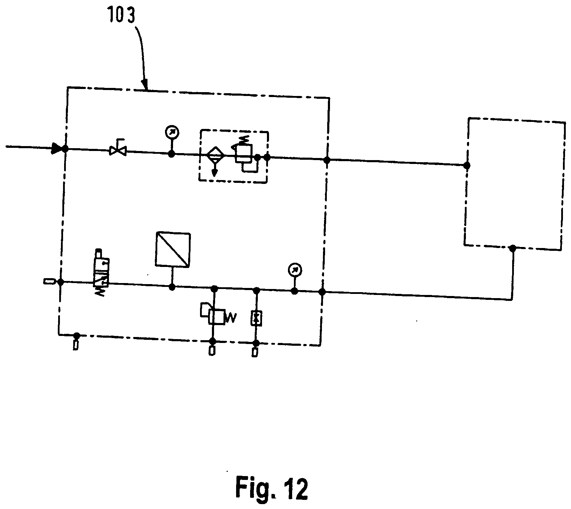

Der von dem Behältnis 102 umschlossene Innenraum kann mit dem in Fig. 12 gezeigten Gas- und/oder Druckluftkreis 103 mit Gas oder Druckluft oder einem Gemisch hieraus beaufschlagt werden. Ein solcher Pneumatik-Steuerkreis 103 kann bspw. Drucksteuerungsbausteine wie Absperrelemente, Druckmesser und Drucksteuerungs- und/oder Begrenzungselemente bspw. in Form entsprechender Ventile aufweisen.

## Patentansprüche

1. Schmelzeverarbeitungsanlage, mit einem Schmelzebeschicker (2) zum Beschicken eines Verarbeitungskopfs, insbesondere Granulierkopfs (3), mit Schmelze, wobei zwischen dem Schmelzebeschicker (2) und dem Verarbeitungskopf ein Anfahrventil (4) zum Ableiten der Schmelze am Verarbeitungskopf vorbei vorgesehen ist, sowie mit einem Zerteiler (7) zum Zerteilen des abgeleiteten, aus dem Anfahrventil (4) ausströmenden Schmelzestrangs in vorzugsweise etwa gleichgroße Schmelzeportionen, wobei der Zerteiler (7) einen bewegbaren Zerteilerkopf (8) aufweist, in dem mehrere Schmelzekanäle (9, 10) ausgebildet sind, von denen je nach Stellung des Zerteilerkopfs (8) jeweils ein anderer mit einem vom Anfahrventil her kommenden Ableitkanal (42) in Strömungsverbindung steht,
**dadurch gekennzeichnet, dass**
die Schmelzekanäle (9, 10) des Zerteilerkopfs (8) zumindest eine stufenförmige Querschnittserweiterung in ihrem Einströmabschnitt, eine vom Austrittsquerschnitt des Ableitkanals (42) abweichende Querschnittsform, und einen offenen Mündungsbereich aus dem Zerteiler (7) heraus aufweisen.

2. Schmelzeverarbeitungsanlage nach dem vorhergehenden Anspruch, wobei die stufenförmige Querschnittserweiterung (100) eine Abrisskante mit Überhang bildet, im Bereich derer sich die Schmelze zumindest teilweise von den Schmelzekanalwandungen löst und stromab derer die Schmelze freihängend abtropft und/oder schwerkraftgetrieben durch die Schmelzekanäle (9, 10) hindurch und/oder aus den Schmelzekanälen (9 und 10) heraustritt.

3. Schmelzeverarbeitungsanlage nach einem der vorhergehenden Ansprüche, wobei die Schmelzekanäle (9, 10) des Zerteilerkopfes (8) im Bereich der stufenförmigen Querschnittserweiterung (100) zusätzlich zur Querschnittsgröße auch ihre Querschnittsform ändern, insbesondere von einer runden Querschnittsform auf eine eckige Querschnittsform übergehen, wobei die Schmelzekanäle (9, 10) stromauf der stufenförmigen Querschnittserweiterung eine zumindest teilweise abgerundete Querschnittsform und stromab der genannten Querschnittserweiterung (100) eine mehreckige Querschnittsform besitzen.

4. Schmelzeverarbeitungsanlage nach einem der vorhergehenden Ansprüche, wobei die Einströmquerschnitte der Schmelzekanäle (9, 10) des Zerteilerkopfes (8) jeweils größer sind als der Ausströmquerschnitt des Ableitkanals (42) und die Mündung des Ableitkanals (42) zumindest teilweise eine Abrisskante für die in den Zerteilerkopf (8) einströmende Schmelze bildet, wobei die Schmelzekanäle (9, 10) umfangsseitig jeweils einen wandlosen, offenen Umfangsabschnitt (110) besitzen.

5. Schmelzeverarbeitungsanlage nach einem der vorhergehenden Ansprüche, wobei die Schmelzekanäle (9, 10) jeweils eine Einlassöffnung besitzen, deren Umfangskontur einen ersten Abschnitt (108), der an die Austrittskontur des Ableitkanals (42) formangepasst ist, und einen zweiten Abschnitt, der von der Austrittskontur des Ableitkanals (42) abweichend konturiert ist, aufweist, wobei der erste Abschnitt (108) auf der Seite des jeweiligen Schmelzekanals (9; 10) liegt, die beim Öffnen des Schmelzekanals (9; 10) den Querschnitt des Ableitkanals (42) zuerst freigibt, wobei die Einlassöffnungen der Schmelzekanäle (9, 10) vorzugsweise jeweils V-förmig konturiert, insbesondere in Form eines abgerundeten V und/oder parabelförmig konturiert, sind.

6. Schmelzeverarbeitungsanlage nach einem der vorhergehenden Ansprüche, wobei die Schmelzekanäle (9, 10) stromab der Querschnittserweiterung (100) jeweils eine Querschnittsfläche besitzen, die mindestens das Zweifache, vorzugsweise mehr als das Dreifache, der Austrittsquerschnittsfläche des Ableitkanals (42) beträgt, wobei sich die Querschnittsfläche der Schmelzekanäle (9, 10) an der stufenförmigen Querschnittserweiterung (100) zumindest verdoppelt.

7. Schmelzeverarbeitungsanlage nach einem der vorhergehenden Ansprüche, wobei die Schmelzekanäle (9, 10) im Zerteilerkopf (8) derart angeordnet und ausgebildet sind, dass unabhängig von der Stellung des Schmelzekopfs (8) immer ein Schmelzekanal (9) zumindest teilweise mit dem vom Anfahrventil her kommenden Ableitkanal (42) in Strömungsverbindung ist, wobei der Zerteilerkopf (8) Teil eines Schlittens (14) ist, der von einem Schlittenantrieb (15) hin und her fahrbar antreibbar ist, oder Teil eines Drehkopfs (16) ist, der von einem Drehantrieb (17) rotatorisch vorzugsweise kontinuierlich antreibbar ist.

8. Schmelzeverarbeitungsanlage nach einem der vorhergehenden Ansprüche, wobei Steuermittel (18) zur variablen Steuerung der Bewegungsgeschwindigkeit und/oder der Bewegungsfrequenz des Zerteilerkopfs (8) relativ zum Ableitkanal vorgesehen sind, wobei vorzugsweise die Steuermittel (18) die genannte Bewegungsgeschwindigkeit und/oder Bewegungsfrequenz in Abhängigkeit einer Brockengröße und/oder in Abhängigkeit des Schmelzevolumenstroms arbeitend ausgebildet sind.

9. Schmelzeverarbeitungsanlage nach einem der vorhergehenden Ansprüche, wobei zwischen dem Zerteilerkopf (8) und dem Anfahrventil (4) ein Zwischen- oder Adapterstück (41) vorgesehen ist, welches den Ableitkanal umfasst, der an die Ableitöffnung (38) des Anfahrventils (4) anschließbar ist und mit den Schmelzekanälen (9, 10) im Zerteilerkopf (8) in Strömungsverbindung verbringbar ist, wobei der Ableitkanal (42) eine düsenförmige Konturierung und/oder eine vorzugsweise ausgangsseitig vorgesehene Querschnittsverjüngung aufweist, und wobei der Ableitkanal (42) eine, vorzugsweise ausgangsseitig vorgesehene, abgerundete, insbesondere kreisförmige oder ovale oder elliptische oder s-förmig-gekrümmte, Querschnittskonturierung besitzt.

10. Schmelzeverarbeitungsanlage nach einem der Ansprüche 1-8, wobei der Ableitkanal (42) eine, vorzugsweise ausgangsseitig vorgesehene, von der Kreisform abweichende, insbesondere eckige und/oder rechteckige und/oder quadratische und/oder dreieckige und/oder vieleckige und/oder sternförmige und/oder x-förmige, Querschnittskonturierung besitzt.

11. Schmelzeverarbeitungsanlage nach einem der vorhergehenden Ansprüche, wobei der Ableitkanal (42) eine, vorzugsweise ausgangsseitig vorgesehene, ringförmige Querschnittskonturierung aufweist und/oder als Ringdüse auch zum Ausformen im Inneren hohler Schmelzeportionen ausgebildet ist, wobei die ringförmige Querschnittskonturierung einander konturmäßig entsprechende Ringaußen- und Innenflächen oder voneinander konturmäßig abweichende Ringinnen- und Außenflächen aufweist.

12. Schmelzeverarbeitungsanlage nach einem der vorhergehenden Ansprüche, wobei zumindest der Zerteilerkopf (8) und/oder das Zwischen- oder Adapterstück (41), insbesondere im Bereich der Schmelze- und/oder Ableitkanäle (9, 10, 42), mit einer Schmelzeanklebungen reduzierenden und/oder das Schmelzeablösen unterstützenden Funktionsschicht versehen ist.

13. Schmelzeverarbeitungsanlage nach einem der vorhergehenden Ansprüche, wobei eine Kühlvorrichtung (6) zum Auskühlen der Schmelzeportionen in zumindest teilweise verfestigte Materialbrocken vorgesehen ist, wobei die Kühlvorrichtung (6) ein Abkühlbad (23) umfasst, das unterhalb der Positioniervorrichtung (5) angeordnet und von der Schmelzevorrichtung durch Schwerkraft erreichbar ist, insbesondere im freien Fall nach Austritt aus dem Zerteilerkopf (8), wobei das Abkühlbad (23) einen Sekundärkühlkreislauf mit einem außerhalb der die Schmelzeportionen kühlenden Flüssigkeit angeordneten Wärmetauscher zur Kühlung der Primärkühlflüssigkeit, in der die Schmelzeportionen gekühlt werden, umfasst, wobei der Kühlvorrichtung (6) eine Wärmerückgewinnungsvorrichtung zur Rückgewinnung der den Schmelzeportionen und/oder Materialbrocken zu entziehenden Wärme zugeordnet ist, wobei die Wärmerückgewinnungsvorrichtung (50) vorzugsweise Speichermittel zur Wärmespeicherung und/oder Wärmeübertragungsmittel zur Übertragung der rückgewonnenen Wärme an zumindest eine zu beheizende Anlagenkomponente und/oder eine Gebäude- und/oder Externheizanlage aufweist, wobei die Wärmerückgewinnungsvorrichtung (50) zumindest einen Wärmetauscher (46, 47, 48) zur Rückgewinnung von im Abkühlbad (23, 24) anfallenden Wärme aufweist, wobei dem Abkühlbad (23) und/oder einem weiteren Abkühlbad (24) ein Abförderer (25) zum Abfördern der verfestigten Materialbrocken aus dem Abkühlbad (23, 24) zugeordnet ist, wobei der Abförderer (25) einen Bandförderer (26) umfasst, der einen spitzwinklig zur Horizontalen geneigten, durch den Pegel des Abkühlbads (23, 24) hindurch verlaufenden ersten Sammelbandabschnitt (27) zum Einsammeln von schwimmenden Materialbrocken und/oder einen am Beckenboden angeordneten zweiten Sammelbandabschnitt (28) zum Einsammeln von im Abkühlbad (23, 24) absinkenden Materialbrocken aufweist, wobei der Abförderer (25) ein flüssigkeitsdurchlässiges Umlaufmittel (29) vorzugsweise eines perforierten Bandes aufweist.

14. Schmelzeverarbeitungsanlage nach einem der vorhergehenden Ansprüche, wobei dem Abförderer (25) eine Trocknungsvorrichtung (30) zum zumindest teilweise Abtrocknen der vom Abförderer (25) abgeförderten Materialbrocken zugeordnet ist, wobei die Trocknungsvorrichtung (30) eine dem Abförderer nachgeordnete Trocknungsstation (31) umfassend einen Zentrifugaltrockner, einen Zyklonenabschneider oder einen Bewegungstrockner wie Rüttler oder dergleichen aufweist und/oder einen einem Abfördererabschnitt zugeordneten Durchgangstrockner (32) zum zumindest teilweise Trocknen der Materialbrocken während des Abförderns umfasst, wobei der genannte Durchgangstrockner (32) vorzugsweise ein Gebläse, einen Absauger, einen Zyklonenabscheider, einen Strahlungstrockner und/oder einen Bewegungstrockner wie einen Rütteltrockner aufweist.

15. Schmelzeverarbeitungsanlage nach einem der vorhergehenden Ansprüche, wobei die Kühlvorrichtung (6) im Bereich der Portioniervorrichtung (5) angeordnete und/oder wirksame Kühlmittel (33) zur Kühlung der Schmelze beim und/oder unmittelbar nach dem Portionieren umfasst, wobei die Kühlmittel (33) vorzugsweise einen Luft- und/oder Gaskühler zur Beaufschlagung der Schmelze mit Kühlluft und/oder -gas, einen Flüssigkeitskühler zur Beaufschlagung der Schmelze mit einer Kühlflüssigkeit und/oder einen Kontaktkühler mit einer von der Schmelzer kontaktierbaren Kühloberfläche umfassen.

16. Schmelzeverarbeitungsanlage nach einem der vorhergehenden Ansprüche, wobei das Anfahrventil (4) zumindest einen Einlasskanal zur Verbindung mit dem zumindest einen Schmelzebeschicker (2), zumindest einen Beschickungskanal zur Verbindung mit dem zumindest einen Verarbeitungskopf und einen Ausschuss- oder Ableitkanal mit einer Ableitöffnung (38) zum Ableiten der Schmelze an den Verarbeitungsköpfen vorbei aufweist, wobei der zumindest eine Eingangskanal durch Verstellen eines bewegbaren Ventilkorpus wahlweise mit einem der Beschickungskanäle oder dem Ausschuss- oder Ableitkanal in Strömungsverbindung bringbar ist.

17. Schmelzeverarbeitungsanlage nach einem der vorhergehenden Ansprüche, wobei dem Zerteiler (7) ein Atmosphärenerzeuger (100) zum Beaufschlagen der zerteilten und/oder zu zerteilenden Schmelzeportionen mit einer definierten Atmosphäre zu- und/oder nachgeordnet ist, wobei der Atmosphärenerzeuger (100) eine im Wesentlichen gasdichte Umgebungskapselung (101) zum Abkapseln der Austrittsumgebung des Zerteilers (7) und/oder der Umgebung nachgeordneter Verarbeitungsstationen aufweist, wobei die aus dem Zerteiler (7) austretenden Schmelzeportionen (39) von dem Atmosphärenerzeuger (100) mit einem Überdruck und/oder einem Schutzgas beaufschlagt sind, wobei an den Zerteiler (7) ausgangsseitig ein vorzugsweise gasdicht ausgebildetes Behältnis angeschlossen ist, in das die aus dem Zerteiler (7) austretenden Schmelzeportionen gelangen, wobei dem Behältnis (102) vorzugsweise ein Druckerzeuger und/oder ein Gasgenerator zum Beaufschlagen des Innenraums des Behältnisses (102) mit Überdruck und/oder Unterdruck und/oder einem Gas oder Luft zugeordnet ist, wobei das Behältnis (102) an zumindest einen, dem Zerteiler (7) nachgeordneten Verarbeitungsbaustein, insbesondere ein Abkühlbad (23) und/oder einen Abförderer (25), angeschlossen ist und/oder auch diesen zumindest einen nachgeordneten Verarbeitungsbaustein umschließt, sodass die Schmelzeportionen (39) auch im Bereich dieses zumindest einen nachgeordneten Verarbeitungsbausteins von der im Innenraum des Behältnisses (102) herrschenden Atmosphäre beaufschlagt sind.

## Claims

1. A melt processing plant, comprising a melt charger (2) for charging a processing head, in particular pelletizing head (3), with melt, wherein between the melt charger (2) and the processing head a diverter valve (4) is provided for discharging the melt past the processing head, and comprising a splitter (7) for splitting the discharged melt strand flowing out of the diverter valve (4) into melt portions preferably of about the same size, wherein the splitter (7) includes a movable splitter head (8) in which several melt channels (9, 10) are formed, of which depending on the position of the splitter head (8) another one each is in flow connection with a discharge channel (42) coming from the diverter valve,
**characterized in that**
the melt channels (9, 10) of the splitter head (8) have at least one step-like cross-sectional enlargement in their inflow portion, a cross-sectional shape different from the outlet cross-section of the discharge channel (42), and an open orifice region out of the splitter (7).

2. The melt processing plant according to the preceding claim, wherein the step-like cross-sectional enlargement (100) forms a tear-off edge with overhang, in the region of which the melt at least partly detaches from the melt channel walls and downstream of which the freely hanging melt drips off and/or driven by gravity exits through the melt channels (9, 10) and/or out of the melt channels (9 and 10).

3. The melt processing plant according to any of the preceding claims, wherein in the region of the step-like cross-sectional enlargement (100) the melt channels (9, 10) of the splitter head (8) also change their cross-sectional shape in addition to the cross-sectional size, in particular transition from a round cross-sectional shape to an angular cross-sectional shape, wherein the melt channels (9, 10) have an at least partly rounded cross-sectional shape upstream of the step-like cross-sectional enlargement and a polygonal cross-sectional shape downstream of said cross-sectional enlargement (100).

4. The melt processing plant according to any of the preceding claims, wherein the inflow cross-sections of the melt channels (9, 10) of the splitter head (8) each are larger than the outflow cross-section of the discharge channel (42) and the orifice of the discharge channel (42) at least partly forms a tear-off edge for the melt flowing into the splitter head (8), wherein the melt channels (9, 10) each have an open circumferential portion (110) without walls on their circumference.

5. The melt processing plant according to any of the preceding claims, wherein the melt channels (9, 10) each have an inlet opening whose circumferential contour includes a first portion (108) which is adapted to the shape of the outlet contour of the discharge channel (42), and a second portion which is contoured different from the outlet contour of the discharge channel (42), wherein the first portion (108) lies on that side of the respective melt channel (9; 10) which on opening of the melt channel (9; 10) first clears the cross-section of the discharge channel (42), wherein the inlet openings of the melt channels (9, 10) preferably each are contoured V-shaped, in particular in the form of a rounded V and/or parabolic.

6. The melt processing plant according to any of the preceding claims, wherein downstream of the cross-sectional enlargement (100) the melt channels (9, 10) each have a cross-sectional area which amounts to at least two times, preferably more than three times the outlet cross-sectional area of the discharge channel (42), wherein the cross-sectional area of the melt channels (9, 10) at least doubles at the step-like cross-sectional enlargement (100).

7. The melt processing plant according to any of the preceding claims, wherein the melt channels (9, 10) are formed and arranged in the splitter head (8) such that independent of the position of the melt head (8) always one melt channel (9) at least partly is in flow connection with the discharge channel (42) coming from the diverter valve, wherein the splitter head (8) is part of a carriage (14) which can reciprocably be driven by a carriage drive (15), or is part of a rotary head (16) which can rotatorily, preferably continuously, be driven by a rotary drive (17).

8. The melt processing plant according to any of the preceding claims, wherein control means (18) are provided for variably controlling the speed of movement and/or the movement frequency of the splitter head (8) relative to the discharge channel, wherein preferably the control means (18) are formed to operate said speed of movement and/or movement frequency in dependence on a chunk size and/or in dependence on the volumetric flow rate of the melt.

9. The melt processing plant according to any of the preceding claims, wherein between the splitter head (8) and the diverter valve (4) an intermediate or adapter piece (41) is provided, which comprises the discharge channel which is connectable to the discharge opening (38) of the diverter valve (4) and can be brought in flow connection with the melt channels (9, 10) in the splitter head (8), wherein the discharge channel (42) has a nozzle-shaped contour and/or a cross-sectional taper preferably provided on the outlet side, and wherein the discharge channel (42) has a rounded, in particular circular or oval or elliptical or s-shaped curved cross-sectional contour preferably provided on the outlet side.

10. The melt processing plant according to any of claims 1-8, wherein the discharge channel (42) has a cross-sectional contour preferably provided on the outlet side, which differs from the circular shape, in particular is angular and/or rectangular and/or square and/or triangular and/or polygonal and/or star-shaped and/or x-shaped.

11. The melt processing plant according to any of the preceding claims, wherein the discharge channel (42) includes a ring-shaped cross-sectional contour preferably provided on the outlet side and/or is formed as ring nozzle also for forming in the interior of hollow melt portions, wherein the ring-shaped cross-sectional contour includes ring outer and inner surfaces corresponding to each other in their contour or ring inner and outer surfaces differing from each other in their contour.

12. The melt processing plant according to any of the preceding claims, wherein at least the splitter head (8) and/or the intermediate or adapter piece (41), in particular in the region of the melt and/or discharge channels (9, 10, 42), is provided with a function layer reducing the adhesion of melt and/or supporting the detachment of melt.

13. The melt processing plant according to any of the preceding claims, wherein a cooling device (6) is provided for cooling the melt portions into at least partly solidified chunks of material, wherein the cooling device (6) comprises a cooling bath (23) which is arranged below the portioning device (5) and can be reached from the melting device by gravity, in particular in free fall after exit from the splitter head (8), wherein the cooling bath (23) comprises a secondary cooling circuit with a heat exchanger for cooling the primary cooling liquid in which the melt portions are cooled, which heat exchanger is arranged outside the liquid cooling the melt portions, wherein a heat recovery device for recovering the heat to be withdrawn from the melt portions and/or chunks of material is associated to the cooling device (6), wherein the heat recovery device (50) preferably includes storage means for heat storage and/or heat transferring means for transferring the recovered heat to at least one plant component to be heated and/or to a building and/or external heating system, wherein the heat recovery device (50) includes at least one heat exchanger (46, 47, 48) for the recovery of heat obtained in the cooling bath (23, 24), wherein a removal conveyor (25) for removing the solidified chunks of material from the cooling bath (23, 24) is associated to the cooling bath (23) and/or to a further cooling bath (24), wherein the removal conveyor (25) comprises a belt conveyor (26) which includes a first collecting belt portion (27) for collecting floating chunks of material, which is inclined at an acute angle to the horizontal and extends through the level of the cooling bath (23, 24), and/or a second collecting belt portion (28) for collecting chunks of material sinking down in the cooling bath (23, 24), which is arranged at the bottom of the basin, wherein the removal conveyor (25) includes a liquid-permeable circulating means (29) preferably of a perforated belt.

14. The melt processing plant according to any of the preceding claims, wherein a drying device (30) for at least partly drying the chunks of material removed by the removal conveyor (25) is associated to the removal conveyor (25), wherein the drying device (30) includes a drying station (31) downstream of the removal conveyor, comprising a centrifugal drier, a cyclone separator or a moving drier such as a shaker or the like and/or a continuous drier (32) associated to a removal conveyor portion for at least partly drying the chunks of material while removing the same, wherein said continuous drier (32) preferably includes a blower, an extractor, a cyclone separator, a radiation drier and/or a moving drier such as a shaking drier.

15. The melt processing plant according to any of the preceding claims, wherein the cooling device (6) comprises cooling means (33) arranged and/or operating in the region of the portioning device (5) for cooling the melt on and/or directly after portioning, wherein the cooling means (33) preferably comprise an air and/or gas cooler for charging the melt with cooling air and/or gas, a liquid cooler for charging the melt with a cooling liquid and/or a contact cooler with a cooling surface to be contacted by the melt.

16. The melt processing plant according to any of the preceding claims, wherein the diverter valve (4) includes at least one inlet channel for connection with the at least one melt charger (2), at least one feed channel for connection with the at least one processing head, and a scrap or discharge channel with a discharge opening (38) for discharging the melt past the processing heads, wherein by adjusting a movable valve body the at least one inlet channel selectively can be brought in flow connection with one of the feed channels or the scrap or discharge channel.

17. The melt processing plant according to any of the preceding claims, wherein an atmosphere generator (100) for charging the melt portions split and/or to be split with a defined atmosphere is associated to and/or arranged downstream of the splitter (7), wherein the atmosphere generator (100) includes a substantially gas-tight environment encapsulation (101) for encapsulating the outlet environment of the splitter (7) and/or the environment of downstream processing stations, wherein the melt portions (39) exiting from the splitter (7) are charged with an overpressure and/or a protective gas by the atmosphere generator (100), wherein a container preferably formed gas-tight is connected to the outlet of the splitter (7), into which container the melt portions exiting from the splitter (7) are delivered, wherein a pressure generator and/or a gas generator for charging the interior space of the container (102) with overpressure and/or underpressure and/or a gas or air preferably is associated to the container (102), wherein the container (102) is connected to at least one processing component arranged downstream of the splitter (7), in particular to a cooling bath (23) and/or a removal conveyor (25), and/or also encloses this at least one downstream processing component, so that the melt portions (39) are exposed to the atmosphere existing in the interior space of the container (102) also in the region of this at least one downstream processing component.

## Revendications

1. Installation de traitement de masse fondue, comportant un chargeur de masse fondue (2) pour alimenter en masse fondue une tête de traitement, en particulier une tête de granulation (3), une vanne de démarrage (4) pour décharger la masse fondue devant la tête de traitement étant prévue entre le chargeur de masse fondue (2) et la tête de traitement, et comportant un découpeur (7) pour découper le cordon de masse fondue s'écoulant hors de la vanne de démarrage (4) en des portions de masse fondue de préférence de même taille, le découpeur (7) possédant une tête de découpage (8) mobile, dans laquelle plusieurs canaux de masse fondue (9, 10) sont formés, dont chaque fois un autre est en communication fluidique avec un canal d'évacuation (42) selon la position de la tête de découpage (8),
**caractérisée en ce que**
les canaux de masse fondue (9, 10) de la tête de découpage (8) possèdent au moins un élargissement de section transversale en forme de marche dans leur partie d'entrée, une forme de section transversale différente de la section transversale de sortie du canal d'évacuation (42), et une région d'embouchure ouverte hors du découpeur (7).

2. Installation de traitement de masse fondue selon la revendication précédente, dans laquelle l'élargissement de section transversale (100) en forme de marche forme une arête de rupture à surplomb, dans la région de laquelle la masse fondue se détache au moins partiellement des parois des canaux de masse fondue et en aval de laquelle la masse fondue suspendue librement s'égoutte et/ou sort à travers les canaux de masse fondue (9, 10) et/ou hors des canaux de masse fondue (9 et 10) entraînée par gravité.

3. Installation de traitement de masse fondue selon l'une quelconque des revendications précédentes, dans laquelle les canaux de masse fondue (9, 10) de la tête de découpage (8) dans la région de l'élargissement de section transversale (100) en forme de marche outre la taille de section transversale aussi changent leur forme de section transversale, en particulier passent d'une forme de section transversale ronde à une forme de section transversale angulaire, les canaux de masse fondue (9, 10) possédant une forme de section transversale au moins partiellement arrondie en amont de l'élargissement de section transversale en forme de marche et une forme de section transversale polygonale en aval dudit élargissement de section transversale (100).

4. Installation de traitement de masse fondue selon l'une quelconque des revendications précédentes, dans laquelle les sections transversales d'admission des canaux de masse fondue (9, 10) de la tête de découpage (8) chacune sont plus grandes que la section transversale de sortie du canal de décharge (42) et l'orifice du canal de décharge (42) au moins partiellement forme une arête de rupture pour la masse fondue s'écoulant dans la tête de découpage (8), les canaux de masse fondue (9, 10) chacun possédant une partie circonférentielle (110) ouverte sans paroi sur sa circonférence.

5. Installation de traitement de masse fondue selon l'une quelconque des revendications précédentes, dans laquelle les canaux de masse fondue (9, 10) chacun possèdent un orifice d'admission dont le contour circonférentiel possède une première partie (108) adaptée à la forme du contour de sortie du canal de décharge (42), et une deuxième partie possédant un contour différent par rapport au contour de sortie du canal de décharge (42), la première partie (108) étant située sur le côté du canal de masse fondue (9, 10) qui en ouvrant le canal de masse fondue (9, 10) est le premier à dégager la section transversale du canal de décharge (42), les orifices d'admission de canaux de masse fondue (9, 10) de préférence chacun possédant un contour en forme de V, en particulier en forme de V arrondi et/ou parabolique.

6. Installation de traitement de masse fondue selon l'une quelconque des revendications précédentes, dans laquelle les canaux de masse fondue (9, 10) en aval de l'élargissement de section transversale (100) chacun possèdent une surface de section transversale qui est au moins deux fois, de préférence plus de trois fois la surface de section transversale de sortie du canal de décharge (42), la surface de section transversale des canaux de masse fondue (9, 10) étant au moins doublée sur l'élargissement de section transversale (100) en forme de marche.

7. Installation de traitement de masse fondue selon l'une quelconque des revendications précédentes, dans laquelle les canaux de masse fondue (9, 10) sont agencés et formés dans la tête de découpage (8) de telle sorte que chaque fois un canal de masse fondue (9) au moins partiellement est en communication fluidique avec le canal de décharge (42) venant de la vanne de démarrage, indépendamment de la position de la tête de découpage (8), la tête de découpage (8) formant partie d'un chariot (14), qui peut être entraîné en va-et-vient par un mécanisme d'entraînement de chariot (15), ou formant partie d'une tête rotative (16), qui peut être entraînée en rotation par un mécanisme d'entraînement rotatif (17) de préférence en continu.

8. Installation de traitement de masse fondue selon l'une quelconque des revendications précédentes, dans laquelle il y sont prévus des moyens de commande (18) pour la commande variable de la vitesse de mouvement et/ou de la fréquence de mouvement de la tête de découpage (8) par rapport au canal de décharge, les moyens de commande (18) de préférence étant formés pour opérer ladite vitesse de mouvement et/ou fréquence de mouvement en fonction d'une taille de fragment et/ou en fonction du débit volumique de la masse fondue.

9. Installation de traitement de masse fondue selon l'une quelconque des revendications précédentes, dans laquelle entre la tête de découpage (8) et la vanne de démarrage (4) une pièce intermédiaire ou adaptatrice (41) est prévue, qui comporte le canal de décharge, qui peut être relié à l'orifice de décharge (38) de la vanne de démarrage (4) et peut être mis en communication fluidique avec les canaux de masse fondue (9, 10) dans la tête de découpage (8), le canal de décharge (42) possédant un contour en forme de buse et/ou un
rétrécissement de section transversale prévu de préférence du côté de la sortie, et le canal de décharge (42) possédant un contour de section transversale prévu de préférence du côté de la sortie, qui est arrondi, en particulier circulaire ou ovale ou elliptique ou courbé en forme de S.

10. Installation de traitement de masse fondue selon l'une quelconque des revendications 1-8, dans laquelle le canal de décharge (42) possède un contour de section transversale de préférence prévu du côté de la sortie, différent de la forme circulaire, en particulier angulaire et/ou rectangulaire et/ou carré et/ou triangulaire et/ou polygonal et/ou en forme d'étoile et/ou en forme de x.

11. Installation de traitement de masse fondue selon l'une quelconque des revendications précédentes, dans laquelle le canal de décharge (42) possède un contour de section transversale annulaire, de préférence prévu du côté de sortie, et/ou est formé comme buse annulaire aussi pour le formage à l'intérieur des portions de masse fondue creuses, le contour de section transversale annulaire possédant des surfaces extérieures et intérieures annulaires, dont les contours se correspondent les uns aux autres, ou des surfaces intérieures et extérieures annulaires, dont les contours sont différents les uns des autres.

12. Installation de traitement de masse fondue selon l'une quelconque des revendications précédentes, dans laquelle au moins la tête de découpage (8) et/ou la pièce intermédiaire ou adaptatrice (41), en particulier dans la région des canaux de masse fondue et/ou des canaux de décharge (9, 10, 42), est pourvue d'une couche de fonction réduisant des adhérences de masse fondue et/ou supportant le détachement de la masse fondue.

13. Installation de traitement de masse fondue selon l'une quelconque des revendications précédentes, dans laquelle un dispositif de refroidissement (6) est prévu pour refroidir les portions de masse fondue pour obtenir des fragments de matériau au moins en partie solidifiées, le dispositif de refroidissement (6) comportant un bain de refroidissement (23), qui est agencé au-dessous du dispositif de portionnement (5) et peut être atteint depuis le dispositif de fusion par gravité, en particulier en chute libre après sortie de la tête de découpage (8), le bain de refroidissement (23) comportant un circuit de refroidissement secondaire avec un échangeur de chaleur agencé en dehors du liquide refroidissant le portions de masse fondue pour refroidir le liquide de refroidissement primaire, dans lequel les portions de masse fondue sont refroidies, un dispositif de récupération de chaleur pour la récupération de la chaleur à retirer des portions de masse fondue et/ou des fragments de matériau étant associé au dispositif de refroidissement (6), le dispositif de récupération de chaleur (50) de préférence comprenant des moyens de stockage pour stocker la chaleur et/ou des moyens de transfert de chaleur pour transférer la chaleur récupérée à au moins une partie d'installation à chauffer et/ou à un système de chauffage de bâtiment et/ou de chauffage externe, le dispositif de récupération de chaleur (50) comprenant au moins un échangeur de chaleur (46, 47, 48) pour la récupération de chaleur obtenue dans le bain de refroidissement (23, 24), un convoyeur d'enlèvement (25) pour enlever les fragments de matériau solidifiés hors du bain de refroidissement (23, 24) étant associé au bain de refroidissement (23) et/ou à un autre bain de refroidissement (24), le convoyeur d'enlèvement (25) comportant un convoyeur à bande (26), qui possède une première partie de bande collectrice (27) inclinée en angle aigu par rapport à l'horizontale et s'étendant à travers le niveau du bain de refroidissement (23, 24) pour ramasser des fragments de matériau flottants et/ou une deuxième partie de bande collectrice (28) agencée au fond du bassin pour ramasser des fragments de matériau descendant dans le bain de refroidissement (23, 24), le convoyeur d'enlèvement (25) possédant un moyen de circulation (29) imperméable aux liquides, de préférence d'une bande perforée.

14. Installation de traitement de masse fondue selon l'une quelconque des revendications précédentes, dans laquelle un dispositif de séchage (30) pour au moins partiellement sécher les fragments de matériau enlevés par le convoyeur d'enlèvement (25) est associé au convoyeur d'enlèvement (25), le dispositif de séchage (30) comprenant une station de séchage (31) en aval du convoyeur d'enlèvement, comportant un sécheur centrifuge, un séparateur cyclone ou un sécheur à mouvement comme un secoueur ou similaire et/ou un sécheur à passage continu (32) associé à une partie du convoyeur d'enlèvement pour au moins partiellement sécher les fragments de matériau pendant l'enlèvement, ledit sécheur à passage continu (32) de préférence comprenant un ventilateur, un aspirateur, un séparateur cyclone, un sécheur à rayonnement et/ou un sécheur à mouvement comme un sécheur vibrant.

15. Installation de traitement de masse fondue selon l'une quelconque des revendications précédentes, dans laquelle le dispositif de refroidissement (6) comporte des moyens de refroidissement (33) agencés et/ou opérants dans la région du dispositif de portionnement (5) pour refroidir la masse fondue lors du et/ou immédiatement après le portionnement, les moyens de refroidissement (33) de préférence comportant un refroidisseur d'air et/ou de gaz pour l'alimentation de la masse fondue en air et/ou gaz de refroidissement, un refroidisseur de liquides pour l'alimentation de la masse fondue en une liquide de refroidissement et/ou un refroidisseur par contact avec une surface de refroidissement pouvant être contacté par la masse fondue.

16. Installation de traitement de masse fondue selon l'une quelconque des revendications précédentes, dans laquelle la vanne de démarrage (4) comprend au moins un canal d'admission destiné à être relié avec le au moins un chargeur de masse fondue (2), au moins un canal de chargement destiné à être relié avec la au moins une tête de traitement, et un canal de déchet ou de décharge avec un orifice de décharge (38) pour décharger la masse fondue devant les têtes de traitement, le au moins un canal d'admission sélectivement pouvant être mis en communication fluidique avec un des canaux de chargement ou avec le canal de déchet ou de décharge en ajustant un corps de vanne mobile.

17. Installation de traitement de masse fondue selon l'une quelconque des revendications précédentes, dans laquelle en aval et/ou en amont du découpeur (7) un générateur d'atmosphère (100) est prévu pour exposer les portions de masse fondue découpés et/ou à découper à une atmosphère définie, le générateur d'atmosphère (100) comprenant une encapsulation d'environnement (101) sensiblement étanche au gaz pour encapsuler l'environnement de sortie du découpeur (7) et/ou des stations de traitement en aval de l'environnement, les portions de masse fondue (39) sortant du découpeur (7) étant alimentées avec une surpression et/ou un gaz protecteur par le générateur d'atmosphère (100), un conteneur de préférence formé étanche au gaz étant relié au découpeur (7) côté sortie, dans lequel les portions de masse fondue sortant du découpeur (7) sont introduites, un générateur de pression et/ou un générateur de gaz pour alimenter l'espace intérieur du conteneur (102) avec une surpression et/ou une dépression et/ou un gaz ou air de préférence étant associé au conteneur (102), le conteneur (102) étant relié à au moins un composant de traitement en aval du découpeur (7), en particulier à un bain de refroidissement (23) et/ou un convoyeur d'enlèvement (25), et/ou aussi renferme cet au moins un composé de traitement en aval, de sorte que les portions de masse fondue (39) sont exposées à l'atmosphère existant dans l'espace intérieure du conteneur (102) aussi dans la région de cet au moins un composé de traitement en aval.
